# EUROPEAN PATENT APPLICATION

(11) **EP 4 503 199 A1**
(43) Date of publication of application: **05.02.2025**
(21) Application number: 23779218.9
(22) Date of filing: 02.03.2023
(51) Int. Cl.: H01M 4/62, C08F 220/28, H01M 4/13, H01M 4/136, H01M 4/139, H01M 4/1397, H01M 4/58

(54) **BINDER COMPOSITION FOR NON-AQUEOUS RECHARGEABLE BATTERY ELECTRODE, SLURRY COMPOSITION FOR NON-AQUEOUS RECHARGEABLE BATTERY ELECTRODE, NON-AQUEOUS RECHARGEABLE BATTERY ELECTRODE, AND NON-AQUEOUS RECHARGEABLE BATTERY**

(30) Priority: 31.03.2022 JP 2022061271
(71) Applicant: Zeon Corporation, Tokyo 100-8246 (JP)
(72) Inventor: MATSUO, Yusaku, Tokyo 100-8246 (JP); SHIBATA, Yoshiyuki, Tokyo 100-8246 (JP)
(74) Representative: Maiwald GmbH
(86) International application number: PCT/JP2023/007912
(87) International publication number: WO 2023/189189

(57) **Abstract**

Provided is a binder composition for a non-aqueous secondary battery electrode that is capable of producing a slurry composition for a non-aqueous secondary battery electrode having excellent dispersibility and that can cause an electrode mixed material layer to display excellent adhesiveness and flexibility. The binder composition for a non-aqueous secondary battery electrode contains a polymer X. The polymer X includes not less than 3 mass% and less than 10 mass% of an acidic group-containing monomer unit, 55-90 mass% of a hydroxy group-containing acrylic acid ester monomer unit, and 5-30 mass% of a hydroxy group-containing methacrylic acid ester monomer unit. Total proportional content of the hydroxy group-containing acrylic acid ester monomer unit and hydroxy group-containing methacrylic acid ester monomer unit in the polymer X is 60-97 mass%. The polymer X has a weight-average molecular weight of not less than 50,000 and less than 500,000.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher secondary battery performance.

An electrode for a secondary battery normally includes an electrode mixed material layer. The electrode mixed material layer is formed, for example, through application and drying on a current collector of a composition in the form of a slurry (slurry composition for a non-aqueous secondary battery electrode) that has an electrode active material, a binder composition for a non-aqueous secondary battery electrode containing a polymer serving a role as a binder, and so forth dispersed in a dispersion medium.

In recent years, there have been attempts to improve binder compositions used in the formation of electrode mixed material layers in order to achieve further improvement of secondary battery performance (for example, refer to Patent Literature (PTL) 1).

As one example, PTL 1 reports that a binder composition containing a water-soluble polymer that includes 50 mass% to 95 mass% of a structural unit derived from an ethylenically unsaturated carboxylic acid ester monomer, that includes 5 mass% to 50 mass% of a structural unit derived from an ethylenically unsaturated carboxylic acid salt monomer, and that has a weight-average molecular weight of 500,000 or more can improve electrode formability, substrate close adherence, and flexibility without loss of dispersibility and viscosity modification function of an aqueous electrode composition.

### CITATION LIST

### Patent Literature

PTL 1: WO2012/008539A1

### SUMMARY

### (Technical Problem)

However, the binder composition of the conventional technique described above leaves room for improvement in terms of increasing dispersibility of a slurry composition for a non-aqueous secondary battery electrode that is produced by mixing the binder composition with an electrode active material, etc.

Moreover, the binder composition of the conventional technique described above also leaves room for improvement in terms of improving adhesiveness of an electrode mixed material layer and causing strong close adherence between the electrode mixed material layer and a current collector and strong close adherence among components in the electrode mixed material layer (for example, among an electrode active material) while also causing the electrode mixed material layer to display excellent flexibility.

Accordingly, one object of the present disclosure is to provide a binder composition for a non-aqueous secondary battery electrode that is capable of producing a slurry composition for a non-aqueous secondary battery electrode having excellent dispersibility and that can cause an electrode mixed material layer to display excellent adhesiveness and flexibility.

Another object of the present disclosure is to provide a slurry composition for a non-aqueous secondary battery electrode that has excellent dispersibility and that can cause an electrode mixed material layer to display excellent adhesiveness and flexibility.

Another object of the present disclosure is to provide an electrode for a non-aqueous secondary battery including an electrode mixed material layer that can display excellent adhesiveness and flexibility.

Another object of the present disclosure is to provide a non-aqueous secondary battery that includes this electrode for a non-aqueous secondary battery.

### (Solution to Problem)

The inventors conducted diligent investigation with the aim of solving the problems set forth above. The inventors discovered that it is possible to produce a slurry composition for a non-aqueous secondary battery electrode having excellent dispersibility and to form an electrode mixed material layer having excellent adhesiveness and flexibility by using a binder composition containing a polymer that includes an acidic group-containing monomer unit, a hydroxy group-containing acrylic acid ester monomer unit, and a hydroxy group-containing methacrylic acid ester monomer unit in specific proportions, that has a total proportional content of the hydroxy group-containing acrylic acid ester monomer unit and the hydroxy group-containing methacrylic acid ester monomer unit that is within a specific range, and that has a weight-average molecular weight that is within a specific range, and, in this manner, the inventors completed the present disclosure.

Specifically, the present disclosure aims to advantageously solve the problems set forth above, and, according to the present disclosure, binder compositions for a non-aqueous secondary battery electrode according to the following (1) to (4), slurry compositions for a non-aqueous secondary battery electrode according to the following (5) to (9), an electrode for a non-aqueous secondary battery according to the following (10), and a non-aqueous secondary battery according to the following (11) are provided.
(1) A binder composition for a non-aqueous secondary battery electrode comprising a polymer X, wherein the polymer X includes not less than 3 mass% and less than 10 mass% of an acidic group-containing monomer unit, not less than 55 mass% and not more than 90 mass% of a hydroxy group-containing acrylic acid ester monomer unit, and not less than 5 mass% and not more than 30 mass% of a hydroxy group-containing methacrylic acid ester monomer unit, total proportional content of the hydroxy group-containing acrylic acid ester monomer unit and the hydroxy group-containing methacrylic acid ester monomer unit in the polymer X is not less than 60 mass% and not more than 97 mass%, and the polymer X has a weight-average molecular weight of not less than 50,000 and less than 500,000.

In the case of a binder composition that contains the specific polymer set forth above, this binder composition is capable of producing a slurry composition for a non-aqueous secondary battery electrode having excellent dispersibility and can cause an electrode mixed material layer to display excellent adhesiveness and flexibility.

Note that when a polymer is said to "include a monomer unit" in the present disclosure, this means that "a polymer obtained using that monomer includes a repeating unit derived from the monomer".

Also note that the "proportional content (mass%)" of each monomer unit included in a polymer that is referred to in the present disclosure can be measured by a nuclear magnetic resonance (NMR) method such as ¹H-NMR.

(2) The binder composition for a non-aqueous secondary battery electrode according to the foregoing (1), wherein the hydroxy group-containing acrylic acid ester monomer unit includes an acrylic acid hydroxyalkyl ester monomer unit.

When the polymer X includes an acrylic acid hydroxyalkyl ester monomer unit as the hydroxy group-containing acrylic acid ester monomer unit, adhesiveness and flexibility of an electrode mixed material layer can be further improved.

(3) The binder composition for a non-aqueous secondary battery electrode according to the foregoing (1) or (2), wherein the hydroxy group-containing methacrylic acid ester monomer unit includes a methacrylic acid hydroxyalkyl ester monomer unit.

When the polymer X includes a methacrylic acid hydroxyalkyl ester monomer unit as the hydroxy group-containing methacrylic acid ester monomer unit, adhesiveness and flexibility of an electrode mixed material layer can be further improved.

(4) The binder composition for a non-aqueous secondary battery electrode according to any one of the foregoing (1) to (3), wherein the acidic group-containing monomer unit includes either or both of a carboxy group-containing monomer unit and a sulfo group-containing monomer unit.

When the polymer X includes either or both of a carboxy group-containing monomer unit and a sulfo group-containing monomer unit as the acidic group-containing monomer unit, adhesiveness of an electrode mixed material layer can be further improved.

(5) A slurry composition for a non-aqueous secondary battery electrode comprising: an electrode active material; and the binder composition for a non-aqueous secondary battery electrode according to any one of the foregoing (1) to (4).

A slurry composition for a non-aqueous secondary battery electrode that contains any one of the binder compositions set forth above in this manner has excellent dispersibility and can cause an electrode mixed material layer to display excellent adhesiveness and flexibility.

(6) The slurry composition for a non-aqueous secondary battery electrode according to the foregoing (5), further comprising a particulate polymer Y that includes a hydrophilic group.

When the slurry composition for a non-aqueous secondary battery electrode further contains a particulate polymer Y that includes a hydrophilic group, dispersibility of the slurry composition and adhesiveness and flexibility of an electrode mixed material layer can be further improved.

(7) The slurry composition for a non-aqueous secondary battery electrode according to the foregoing (5) or (6), wherein the electrode active material includes olivine-type lithium iron phosphate.

When olivine-type lithium iron phosphate is used as the electrode active material, stability against overcharging of a non-aqueous secondary battery can be improved.

(8) The slurry composition for a non-aqueous secondary battery electrode according to any one of the foregoing (5) to (7), further comprising a conductive material that includes one or more carbon nanotubes.

When carbon nanotubes are used as the conductive material, internal resistance of a non-aqueous secondary battery can be reduced.

(9) The slurry composition for a non-aqueous secondary battery electrode according to the foregoing (8), wherein the conductive material further includes a particulate conductive material.

When a particulate conductive material is further used as the conductive material, flexibility of an electrode mixed material layer can be further improved.

(10) An electrode for a non-aqueous secondary battery comprising an electrode mixed material layer formed using the slurry composition for a non-aqueous secondary battery electrode according to any one of the foregoing (5) to (9).

A presently disclosed electrode for a non-aqueous secondary battery includes an electrode mixed material layer that is formed using any one of the slurry compositions for a non-aqueous secondary battery electrode set forth above and that can display excellent adhesiveness and flexibility.

(11) A non-aqueous secondary battery comprising the electrode for a non-aqueous secondary battery according to the foregoing (10).

A secondary battery that includes the electrode for a non-aqueous secondary battery set forth above has reduced internal resistance and excellent battery characteristics, for example.

### (Advantageous Effect)

According to the present disclosure, it is possible to provide a binder composition for a non-aqueous secondary battery electrode that is capable of producing a slurry composition for a non-aqueous secondary battery electrode having excellent dispersibility and that can cause an electrode mixed material layer to display excellent adhesiveness and flexibility.

Moreover, according to the present disclosure, it is possible to provide a slurry composition for a non-aqueous secondary battery electrode that has excellent dispersibility and that can cause an electrode mixed material layer to display excellent adhesiveness and flexibility.

Furthermore, according to the present disclosure, it is possible to provide an electrode for a non-aqueous secondary battery including an electrode mixed material layer that can display excellent adhesiveness and flexibility.

Also, according to the present disclosure, it is possible to provide a non-aqueous secondary battery that includes this electrode for a non-aqueous secondary battery.

### DETAILED DESCRIPTION

The following provides a detailed description of embodiments of the present disclosure.

A presently disclosed binder composition for a non-aqueous secondary battery electrode (hereinafter, also referred to simply as a "binder composition") can be used in production of a slurry composition for a non-aqueous secondary battery electrode (hereinafter, also referred to simply as a "slurry composition"). Moreover, a slurry composition for a non-aqueous secondary battery electrode produced using the presently disclosed binder composition for a non-aqueous secondary battery electrode can be used in formation of an electrode mixed material layer that is included in an electrode of a non-aqueous secondary battery such as a lithium ion secondary battery (i.e., an electrode for a non-aqueous secondary battery). Furthermore, a feature of a presently disclosed non-aqueous secondary battery (hereinafter, also referred to simply as a "secondary battery") is that it includes an electrode for a non-aqueous secondary battery (hereinafter, also referred to simply as an "electrode") including an electrode mixed material layer that is formed from a presently disclosed slurry composition for a non-aqueous secondary battery electrode.

### (Binder composition for non-aqueous secondary battery electrode)

A feature of the presently disclosed binder composition is that it contains a specific polymer X. The presently disclosed binder composition is capable of producing a slurry composition having excellent dispersibility and can cause an electrode mixed material layer that is formed using the slurry composition to display excellent adhesiveness and flexibility.

Moreover, a slurry composition that is produced using the presently disclosed binder composition can form an electrode mixed material layer having a uniform structure as a result of the slurry composition having excellent dispersibility. Furthermore, an electrode mixed material layer that is formed from a slurry composition produced using the presently disclosed binder composition also has excellent flexibility as previously described, which makes it possible to inhibit the occurrence of cracking in a situation in which an electrode is subjected to rolling, folding, or the like in accordance with the shape of a secondary battery during secondary battery production, for example. Consequently, an electrode mixed material layer that is formed from a slurry composition produced using the presently disclosed binder composition can reduce internal resistance of a secondary battery as a result of the electrode mixed material layer having a uniform structure and little cracking.

Note that the presently disclosed binder composition may optionally further contain a solvent. Moreover, the presently disclosed binder composition may optionally further contain components other than the polymer X and the solvent (i.e., other components).

### <Polymer X>

The polymer X is a component that can function as a dispersant for causing good dispersion of components such as an electrode active material and a conductive material in a slurry composition produced using the binder composition. In addition, the polymer X can also function as a binder in an electrode mixed material layer that is formed using the slurry composition.

The polymer X includes an acidic group-containing monomer unit, a hydroxy group-containing acrylic acid ester monomer unit, and a hydroxy group-containing methacrylic acid ester monomer unit in specific proportions, has a total proportional content of the hydroxy group-containing acrylic acid ester monomer unit and the hydroxy group-containing methacrylic acid ester monomer unit that is within a specific range, and has a weight-average molecular weight that is within a specific range.

Moreover, the polymer X may further include monomer units other than the aforementioned acidic group-containing monomer unit, hydroxy group-containing acrylic acid ester monomer unit, and hydroxy group-containing methacrylic acid ester monomer unit (hereinafter, also referred to as "other monomer units").

Although no specific limitations are made, the polymer X is normally water-soluble. Note that when a polymer is said to be "water-soluble" in the present disclosure, this means that when 0.5 g (in terms of solid content) of the polymer is dissolved in 100 g of water at a temperature of 25°C, insoluble content is less than 5.0 mass%.

### <<Acidic group-containing monomer unit>>

Examples of acidic group-containing monomers that can form the acidic group-containing monomer unit in the polymer X include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Note that a hydrogen atom in the carboxy group of any of the above-described carboxy group-containing monomers may be replaced with an inorganic ion or an organic ion such that the carboxy group is in the form of an inorganic salt or an organic salt. In other words, the carboxy group-containing monomer may be in the form of a carboxylic acid salt.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that a hydrogen atom in the sulfo group of any of the above-described sulfo group-containing monomers may be replaced with an inorganic ion or an organic ion such that the sulfo group is in the form of an inorganic salt or an organic salt. In other words, the sulfo group-containing monomer may be in the form of a sulfonic acid salt.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that a hydrogen atom in the phosphate group of any of the above-described phosphate group-containing monomers may be replaced with an inorganic ion or an organic ion such that the phosphate group is in the form of an inorganic salt or an organic salt. In other words, the phosphate group-containing monomer may be in the form of a phosphoric acid salt.

Note that one of these acidic group-containing monomers may be used individually, or two or more of these acidic group-containing monomers may be used in a freely selected ratio.

Moreover, from a viewpoint of further improving adhesiveness of a formed electrode mixed material layer, a carboxy group-containing monomer or a sulfo group-containing monomer is preferable as an acidic group-containing monomer.

The proportional content of the acidic group-containing monomer unit in the polymer X when all monomer units included in the polymer X are taken to be 100 mass% is required to be 3 mass% or more, and is preferably 4 mass% or more, more preferably 5 mass% or more, and even more preferably 6 mass% or more. Moreover, the proportional content of the acidic group-containing monomer unit in the polymer X when all monomer units included in the polymer X are taken to be 100 mass% is required to be less than 10 mass%, and is preferably 9 mass% or less, and more preferably 8 mass% or less. When the proportional content of the acidic group-containing monomer unit in the polymer X is 3 mass% or more, dispersibility of a slurry composition that is produced using the binder composition can be sufficiently improved, and adhesiveness of an electrode mixed material layer that is formed using the slurry composition can be sufficiently improved. On the other hand, when the proportional content of the acidic group-containing monomer unit in the polymer X is less than 10 mass%, sufficiently high flexibility of a formed electrode mixed material layer can be ensured.

### <<Hydroxy group-containing acrylic acid ester monomer unit>>

The hydroxy group-containing acrylic acid ester monomer unit in the polymer X can improve adhesiveness of an electrode mixed material layer, presumably due to hydroxy group interactions between molecules of the polymer X. Moreover, the hydroxy group-containing acrylic acid ester monomer unit in the polymer X can improve flexibility of an electrode mixed material layer, presumably due to flexibility being imparted to molecular chains of the polymer X.

Examples of hydroxy group-containing acrylic acid ester monomers that can form the hydroxy group-containing acrylic acid ester monomer unit in the polymer X include alkanol esters of acrylic acid (also referred to as "acrylic acid hydroxyalkyl ester monomers") such as 2-hydroxyethyl acrylate, 2-hydroxypropyl acrylate, and 4-hydroxybutyl acrylate; and esters of acrylic acid and polyalkylene glycol (also referred to as "acrylic acid polyalkylene glycol ester monomers") represented by a general formula: CH₂=CH-COO-(C_{q}H_{2q}O)ₚ-H (where p indicates an integer of 2 to 9 and q indicates an integer of 2 to 4). Note that one of these hydroxy group-containing acrylic acid ester monomers may be used individually, or two or more of these hydroxy group-containing acrylic acid ester monomers may be used in a freely selected ratio.

In particular, it is preferable to use an alkanol ester of acrylic acid (acrylic acid hydroxyalkyl ester monomer) such as 2-hydroxyethyl acrylate, 2-hydroxypropyl acrylate, or 4-hydroxybutyl acrylate as a hydroxy group-containing acrylic acid ester monomer from a viewpoint of further improving adhesiveness and flexibility of an electrode mixed material layer.

The proportional content of the hydroxy group-containing acrylic acid ester monomer unit in the polymer X when all monomer units included in the polymer X are taken to be 100 mass% is required to be 55 mass% or more, and is preferably 60 mass% or more, and more preferably 65 mass% or more. Moreover, the proportional content of the hydroxy group-containing acrylic acid ester monomer unit in the polymer X when all monomer units included in the polymer X are taken to be 100 mass% is required to be 90 mass% or less, and is preferably 85 mass% or less, and more preferably 80 mass% or less. When the proportional content of the hydroxy group-containing acrylic acid ester monomer unit in the polymer X is 55 mass% or more, adhesiveness of a formed electrode mixed material layer can be sufficiently improved, presumably due to increased hydroxy group interactions between molecules of the polymer X. Moreover, when the proportional content of the hydroxy group-containing acrylic acid ester monomer unit in the polymer X is 55 mass% or more, flexibility of a formed electrode mixed material layer can be sufficiently improved, presumably due to increased flexibility of molecular chains of the polymer X. On the other hand, when the proportional content of the hydroxy group-containing acrylic acid ester monomer unit in the polymer X is 90 mass% or less, adhesiveness of a formed electrode mixed material layer can be sufficiently improved because a sufficiently high proportional content of the subsequently described hydroxy group-containing methacrylic acid ester monomer unit can be ensured.

### <<Hydroxy group-containing methacrylic acid ester monomer unit>>

The hydroxy group-containing methacrylic acid ester monomer unit in the polymer X can improve adhesiveness of an electrode mixed material layer, presumably due to hydroxy group interactions between molecules of the polymer X. Moreover, the hydroxy group-containing methacrylic acid ester monomer unit in the polymer X can improve flexibility of an electrode mixed material layer, presumably due to the spatial structure of the polymer X spreading out due to steric hinderance of molecular chains of the polymer X and thereby enabling the polymer X to thinly cover the surface of an electrode active material over a wide range.

Examples of hydroxy group-containing methacrylic acid ester monomers that can form the hydroxy group-containing methacrylic acid ester monomer unit in the polymer X include alkanol esters of methacrylic acid (also referred to as "methacrylic acid hydroxyalkyl ester monomers") such as 2-hydroxyethyl methacrylate and 2-hydroxypropyl methacrylate; and esters of methacrylic acid and polyalkylene glycol (also referred to as "methacrylic acid polyalkylene glycol ester monomers") represented by a general formula: CH₂=C(CH₃)-COO-(CₛH₂ₛO)ᵣ-H (where r indicates an integer of 2 to 9, and s indicates an integer of 2 to 4). Note that one of these hydroxy group-containing methacrylic acid ester monomers may be used individually, or two or more of these hydroxy group-containing methacrylic acid ester monomers may be used in a freely selected ratio.

In particular, it is preferable to use an alkanol ester of methacrylic acid (methacrylic acid hydroxyalkyl ester monomer) such as 2-hydroxyethyl methacrylate or 2-hydroxypropyl methacrylate as a hydroxy group-containing methacrylic acid ester monomer from a viewpoint of further improving adhesiveness and flexibility of an electrode mixed material layer.

The proportional content of the hydroxy group-containing methacrylic acid ester monomer unit in the polymer X when all monomer units included in the polymer X are taken to be 100 mass% is required to be 5 mass% or more, and is preferably 7.5 mass% or more, more preferably 10 mass% or more, even more preferably 11 mass% or more, and further preferably 15 mass% or more. Moreover, the proportional content of the hydroxy group-containing methacrylic acid ester monomer unit in the polymer X when all monomer units included in the polymer X are taken to be 100 mass% is required to be 30 mass% or less, and is preferably 27.5 mass% or less, and more preferably 25 mass% or less. When the proportional content of the hydroxy group-containing methacrylic acid ester monomer unit in the polymer X is 5 mass% or more, adhesiveness of a formed electrode mixed material layer can be sufficiently improved, presumably due to increased hydroxy group interactions between molecules of the polymer X. Moreover, when the proportional content of the hydroxy group-containing methacrylic acid ester monomer unit in the polymer X is 5 mass% or more, flexibility of an electrode mixed material layer can be sufficiently improved, presumably due to increased spreading out of the spatial structure of the polymer X due to steric hinderance of molecular chains of the polymer X, which thereby enables the polymer X to thinly cover the surface of an electrode active material over a wide range. On the other hand, when the proportional content of the hydroxy group-containing methacrylic acid ester monomer unit in the polymer X is 30 mass% or less, it is presumed that excessive steric hinderance of molecular chains of the polymer X can be suppressed and that sufficiently high flexibility of molecular chains of the polymer X can be ensured, and it is also the case that a sufficiently high proportional content of the previously described hydroxy group-containing acrylic acid ester monomer unit can be ensured, which makes it possible to sufficiently improve adhesiveness and flexibility of a formed electrode mixed material layer.

### <<Total proportional content of hydroxy group-containing acrylic acid ester monomer unit and hydroxy group-containing methacrylic acid ester monomer unit>>

The total proportional content of the hydroxy group-containing acrylic acid ester monomer unit and the hydroxy group-containing methacrylic acid ester monomer unit in the polymer X when all monomer units included in the polymer X are taken to be 100 mass% is required to be 60 mass% or more, and is preferably 70 mass% or more, and more preferably 80 mass% or more. Moreover, the total proportional content of the hydroxy group-containing acrylic acid ester monomer unit and the hydroxy group-containing methacrylic acid ester monomer unit in the polymer X when all monomer units included in the polymer X are taken to be 100 mass% is required to be 97 mass% or less, and is preferably 95.5 mass% or less, and more preferably 94 mass% or less. When the total proportional content of the hydroxy group-containing acrylic acid ester monomer unit and the hydroxy group-containing methacrylic acid ester monomer unit in the polymer X is 60 mass% or more, adhesiveness and flexibility of a formed electrode mixed material layer can be sufficiently improved. On the other hand, when the total proportional content of the hydroxy group-containing acrylic acid ester monomer unit and the hydroxy group-containing methacrylic acid ester monomer unit in the polymer X is 97 mass% or less, sufficiently high dispersibility of a slurry composition that is produced using the binder composition and adhesiveness of an electrode mixed material layer that is formed using the slurry composition can be ensured because a sufficiently high proportional content of the previously described acidic group-containing monomer unit can be ensured.

### <<Other monomer units>>

The polymer X may further include other monomer units.

No specific limitations are placed on other monomer units in the polymer X so long as the desired effects according to the present disclosure are obtained, and examples of other monomer units include an unsaturated carboxylic acid amide monomer unit and a nitrile group-containing monomer unit. In particular, a nitrile group-containing monomer unit is preferable as another monomer unit that can be included in the polymer X.

### [Unsaturated carboxylic acid amide monomer unit]

A compound having a chemical structure resulting from an unsaturated carboxylic acid such as (meth)acrylic acid undergoing dehydration condensation with ammonia, a primary amine, or a secondary amine can be used as an unsaturated carboxylic acid amide monomer that can form the unsaturated carboxylic acid amide monomer unit. Specific examples of unsaturated carboxylic acid amide monomers include acrylamide, methacrylamide, N,N-dimethylacrylamide, N,N-dimethylmethacrylamide, N-isopropylacrylamide, and N-isobutylacrylamide. One of these unsaturated carboxylic acid amide monomers may be used individually, or two or more of these unsaturated carboxylic acid amide monomers may be used in a freely selected ratio. In particular, from a viewpoint of increasing interactions between molecules through hydrogen bonding in the polymer X, it is preferable to use acrylamide or methacrylamide, and more preferable to used acrylamide.

The proportional content of the unsaturated carboxylic acid amide monomer unit in the polymer X may be 0 mass% or more, may be 1 mass% or more, or may be 2 mass% or more, and may be 20 mass% or less, may be 10 mass% or less, or may be 5 mass% or less.

It may also of course be the case that the polymer X does not include an unsaturated carboxylic acid amide monomer unit.

### [Nitrile group-containing monomer unit]

Examples of nitrile group-containing monomers that can form the nitrile group-containing monomer unit include α,β-ethylenically unsaturated nitrile monomers. No specific limitations are placed on α,β-ethylenically unsaturated nitrile monomers that can be used other than being an α,β-ethylenically unsaturated compound that includes a nitrile group. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. In particular, acrylonitrile and methacrylonitrile are preferable, and acrylonitrile is more preferable as a nitrile group-containing monomer.

One of these nitrile group-containing monomers may be used individually, or two or more of these nitrile group-containing monomers may be used in a freely selected ratio.

The proportional content of the nitrile group-containing monomer unit in the polymer X can be set as 0 mass% or more, is preferably 1 mass% or more, and more preferably 2 mass% or more, and is preferably 10 mass% or less, and more preferably 5 mass% or less.

### <<Production method of polymer X>>

The polymer X can be produced as described below, for example, but is not specifically limited to being produced in this manner.

The above described acidic group-containing monomer, hydroxy group-containing acrylic acid ester monomer, hydroxy group-containing methacrylic acid ester monomer, and other monomers are mixed in a solvent such as water. A polymerization accelerator is then added to the resultant mixture. Thereafter, a polymerization initiator is added to initiate a polymerization reaction. A cycle of addition of the polymerization accelerator, addition of the polymerization initiator, and polymerization may subsequently be performed once or twice or more as necessary. The polymerization temperature when the polymerization initiator is added to initiate the polymerization reaction is preferably not lower than 35°C and not higher than 65°C, and more preferably not lower than 40°C and not higher than 55°C, for example. The time of the polymerization reaction between addition of the polymerization initiator and addition of the polymerization accelerator is preferably not less than 5 minutes and not more than 40 minutes, and more preferably not less than 10 minutes and not more than 30 minutes, for example. Note that the above-described operations are preferably performed in a nitrogen atmosphere. Also note that a chain transfer agent may be used as a polymerization aid in the polymerization reaction. After the polymerization reaction, a reaction inhibitor is used to stop the polymerization reaction. Next, the product is cooled, is placed under an air atmosphere, and is subsequently adjusted to a pH of not lower than 7.0 and not higher than 9.0 through addition of lithium hydroxide aqueous solution or the like.

A known polymerization initiator can be used as the polymerization initiator without any specific limitations. The polymerization initiator may be potassium persulfate, sodium persulfate, ammonium persulfate, or the like, for example. Of these polymerization initiators, it is preferable to used potassium persulfate. In a case in which addition of a polymerization initiator is performed a plurality of times, the polymerization initiator may be the same or different in each addition.

The used amount of the polymerization initiator can be adjusted as appropriate within a range that yields the desired effects according to the present disclosure.

The polymerization accelerator may be L-ascorbic acid, sodium hydrogen sulfite, or the like, for example. In a case in which addition of a polymerization accelerator is performed a plurality of times, the polymerization accelerator may be the same or different in each addition. In particular, it is preferable that L-ascorbic acid serving as a polymerization accelerator is present in the polymerization system at the start of the polymerization reaction.

The used amount of the polymerization accelerator can be adjusted as appropriate within a range that yields the desired effects according to the present disclosure.

### <<Weight-average molecular weight (Mw)>>

The weight-average molecular weight (Mw) of the polymer X is required to be 50,000 or more, and is preferably 75,000 or more, more preferably 100,000 or more, and even more preferably 150,000 or more. Moreover, the weight-average molecular weight (Mw) of the polymer X is required to be less than 500,000, and is preferably less than 400,000, and more preferably less than 300,000. When the weight-average molecular weight (Mw) of the polymer X is 50,000 or more, adhesiveness of a formed electrode mixed material layer can be sufficiently improved. On the other hand, when the weight-average molecular weight (Mw) of the polymer X is less than 500,000, dispersibility of a slurry composition that is produced using the binder composition can be sufficiently improved.

Note that the weight-average molecular weight (Mw) of the polymer X can be controlled through polymerization conditions in the production method of the polymer X described above. Specifically, the weight-average molecular weight (Mw) of the polymer X can be controlled through the type and additive amount of a polymerization initiator, a polymerization accelerator, a chain transfer agent, and so forth, the time and temperature of the polymerization reaction, etc.

### <<Molecular weight distribution (Mw/Mn)>>

The molecular weight distribution (Mw/Mn) of the polymer X is preferably 3.0 or more, more preferably 5.0 or more, and even more preferably 7.5 or more, and is preferably 25 or less, more preferably 20 or less, even more preferably 15 or less, further preferably 13 or less, and even further preferably 12 or less.

Note that the molecular weight distribution (Mw/Mn) of the polymer X can be controlled through polymerization conditions in the production method of the polymer X described above. Specifically, the molecular weight distribution (Mw/Mn) of the polymer X can be controlled through the type and additive amount of a polymerization initiator, a polymerization accelerator, a chain transfer agent, and so forth, the time and temperature of the polymerization reaction, etc.

### <Solvent>

Any known solvent in which the above-described polymer X can be dissolved or dispersed can be adopted as the solvent that can be used in production of the presently disclosed binder composition. Of such solvents, water is preferable as the solvent. Note that a solvent such as water that has been used in production of the polymer X can be used as at least a portion of the solvent that is contained in the binder composition.

### <Other components>

Besides the above-described polymer X and solvent, the presently disclosed binder composition may further contain any other components such as reinforcing materials, leveling agents, viscosity modifiers, and additives for electrolyte solution. Known components can be used as these other components without any specific limitations so long as they do not affect battery reactions. One of these components may be used individually, or two or more of these components may be used in combination in a freely selected ratio.

Moreover, the presently disclosed binder composition may further contain a particulate polymer Y that can be contained in the presently disclosed slurry composition described further below.

### <Production method of binder composition>

The presently disclosed binder composition can be produced by, for example, mixing the polymer X and other components in a solvent such as water by a known mixing method.

Moreover, an aqueous solution or water dispersion of the polymer X that is obtained through the production method of the polymer X described above can, for example, be used in that form as the presently disclosed binder composition.

Furthermore, production of the binder composition and production of the subsequently described slurry composition may be performed at the same time by mixing the polymer X with an electrode active material and subsequently adding other components such as an optionally used particulate polymer Y, for example.

### (Slurry composition for non-aqueous secondary battery electrode)

A feature of the presently disclosed slurry composition is that it contains an electrode active material and the binder composition set forth above.

The presently disclosed slurry composition has excellent dispersibility and can cause an electrode mixed material layer that is formed using the slurry composition to display excellent adhesiveness and flexibility as a result of the presently disclosed slurry composition containing the presently disclosed binder composition set forth above.

Moreover, the presently disclosed slurry composition can form an electrode mixed material layer having a uniform structure as a result of the slurry composition having excellent dispersibility. Furthermore, an electrode mixed material layer that is formed from the presently disclosed slurry composition also has excellent flexibility as previously described, which makes it possible to inhibit the occurrence of cracking in a situation in which an electrode is subjected to rolling, folding, or the like in accordance with the shape of a secondary battery during secondary battery production, for example. Consequently, an electrode mixed material layer that is formed from the presently disclosed slurry composition can reduce internal resistance of a secondary battery as a result of the electrode mixed material layer having a uniform structure and little cracking.

The presently disclosed slurry composition may optionally further contain a particulate polymer Y and a conductive material in addition to the electrode active material and the binder composition.

The presently disclosed slurry composition also normally further contains a dispersion medium such as water.

Moreover, the presently disclosed slurry composition may further contain components other than the aforementioned electrode active material, binder composition, particulate polymer, conductive material, and dispersion medium (i.e., other components).

The proportional content of the electrode active material in the slurry composition is, for example, preferably not less than 90 mass% and not more than 99 mass% when all solid content contained in the slurry composition is taken to be 100 mass%. When the proportional content of the electrode active material in the slurry composition is not less than the lower limit set forth above, energy density of a secondary battery can be improved. On the other hand, when the proportional content of the electrode active material in the slurry composition is not more than the upper limit set forth above, sufficiently high dispersibility of the slurry composition and adhesiveness and flexibility of an electrode mixed material layer can be ensured.

The presently disclosed slurry composition may be a slurry composition for a non-aqueous secondary battery positive electrode that contains a positive electrode active material as the electrode active material or may be a slurry composition for a non-aqueous secondary battery negative electrode that contains a negative electrode active material as the electrode active material. Since flexibility can particularly be an issue in the case of a positive electrode mixed material layer, it is preferable for the presently disclosed slurry composition to be a slurry composition for a non-aqueous secondary battery positive electrode from a viewpoint of further improving flexibility of a positive electrode mixed material layer as a formed electrode mixed material layer.

Although the following provides a detailed description of a case in which the presently disclosed slurry composition for a non-aqueous secondary battery electrode is a slurry composition for a lithium ion secondary battery positive electrode, the presently disclosed slurry composition for a non-aqueous secondary battery electrode is not limited to the following example.

### <Electrode active material (positive electrode active material)>

A known positive electrode active material can be used as the positive electrode active material of a lithium ion secondary battery without any specific limitations.

Specifically, the positive electrode active material may be a compound that includes a transition metal such as a transition metal oxide, a transition metal sulfide, or a complex metal oxide of lithium and a transition metal, for example. Examples of the transition metal include Ti, V, Cr, Mn, Fe, Co, Ni, Cu, and Mo.

Examples of the transition metal oxide include MnO, MnO₂, V₂O₅, V₆O₁₃, TiO₂, Cu₂V₂O₃, amorphous V₂O-P₂O₅, amorphous MoO₃, amorphous V₂O₅, and amorphous V₆O₁₃.

Examples of the transition metal sulfide include TiS₂, TiS₃, amorphous MoS₂, and FeS.

Examples of the complex metal oxide of lithium and a transition metal include a lithium-containing complex metal oxide having a layered structure, a lithium-containing complex metal oxide having a spinel structure, and a lithium-containing complex metal oxide having an olivine structure.

The lithium-containing complex metal oxide having a layered structure may be lithium-containing cobalt oxide (LiCoO₂), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, a solid solution of LiMaO₂ and Li₂MbO₃, or the like, for example. Note that the lithium-containing complex oxide of Co-Ni-Mn may be Li[Ni_{0.5}Co_{0.2}Mn_{0.3}]O₂, Li[Ni_{1/3}Co_{1/3}Mn_{1/3}]O₂, or the like. The solid solution of LiMaO₂ and Li₂MbO₃ may be xLiMaO₂·(1-x)Li₂MbO₃ or the like, for example, where x represents a number satisfying 0 < x < 1, Ma represents one or more transition metals having an average oxidation state of 3+, and Mb represents one or more transition metals having an average oxidation state of 4+. Examples of solid solutions such as described above include Li[Ni_{0.17}Li_{0.2}Co_{0.07}Mn_{0.56}]O₂.

The term "average oxidation state" as used in the present specification refers to an average oxidation state of the "one or more transition metals" and is calculated from the molar quantities and the valences of the transition metals. For example, in a case in which the "one or more transition metals" are composed of 50 mol% of Ni²⁺ and 50 mol% of Mn⁴⁺, the average oxidation state of the "one or more transition metals" is (0.5) × (2+) + (0.5) × (4+) = 3+.

The lithium-containing complex metal oxide having a spinel structure may be lithium manganate (LiMn₂O₄) or a compound in which some of the Mn in lithium manganate (LiMn₂O₄) has been substituted for another transition metal, for example. One specific example thereof is Liₛ[Mn₂₋ₜMcₜ]O₄, such as LiNi_{0.5}Mn_{1.5}O₄, where Mc represents one or more transition metals having an average oxidation state of 4+, specific examples of which include Ni, Co, Fe, Cu, and Cr, t represents a number satisfying 0 < t < 1, and s represents a number satisfying 0 ≤ s ≤ 1. Note that a lithium-rich spinel compound represented by Li₁₊ₓMn₂₋ₓO₄ (0 < x < 2) can also be used as the positive electrode active material.

The lithium-containing complex metal oxide having an olivine structure may be an olivine-type lithium phosphate compound represented by Li_{y}MdPO₄, such as olivine-type lithium iron phosphate (LiFePO₄), olivine-type lithium manganese phosphate (LiMnPO₄), or olivine-type lithium manganese iron phosphate (LiMn₁₋ₓFeₓPO₄; 0 < x < 1), where Md represents one or more transition metals having an average oxidation state of 3+, examples of which include Mn, Fe, and Co, and y represents a number satisfying 0 ≤ y ≤ 2. Moreover, in the olivine-type lithium phosphate compound represented by the formula Li_{y}MdPO₄, some of Md may be substituted for another metal. Examples of possible substituting metals include Cu, Mg, Zn, V, Ca, Sr, Ba, Ti, Al, Si, B, and Mo.

Of the examples described above, olivine-type lithium iron phosphate is preferable from a viewpoint of improving stability against overcharging of a secondary battery.

Note that the particle diameter of the positive electrode active material is not specifically limited and can be adjusted as appropriate within a range that yields the desired effects according to the present disclosure. For example, the average particle diameter of the positive electrode active material is preferably 2 µm or less. The average particle diameter of a positive electrode active material referred to in the present disclosure is the particle diameter D50 at which, in a particle size distribution (by volume) measured using a laser diffraction particle diameter analyzer produced by Malvern Panalytical Ltd., cumulative volume calculated from a small diameter end of the distribution reaches 50%.

### <Binder composition>

The presently disclosed binder composition set forth above can be used as the binder composition.

The additive amount of the binder composition in production of the slurry composition can be adjusted as appropriate within a range that yields the desired effects according to the present disclosure. For example, the additive amount of the binder composition is preferably adjusted such that when all solid content contained in the slurry composition is taken to be 100 mass%, the proportional content of the polymer X is not less than 0.1 mass% and not more than 5 mass%. When the proportional content of the polymer X in the slurry composition is not less than the lower limit set forth above, dispersibility of the slurry composition and adhesiveness and flexibility of an electrode mixed material layer can be further improved. On the other hand, when the proportional content of the polymer X in the slurry composition is not more than the upper limit set forth above, internal resistance of a secondary battery can be reduced.

### <Particulate polymer Y>

The particulate polymer Y is a component that can function as a binder in conjunction with the previously described polymer X in an electrode mixed material layer.

Note that the particulate polymer Y is considered to be a different polymer to the previously described polymer X.

The particulate polymer Y preferably includes a hydrophilic group. By using a particulate polymer that includes a hydrophilic group as the particulate polymer Y, it is possible to further improve dispersibility of the slurry composition and adhesiveness and flexibility of a formed electrode mixed material layer.

No specific limitations are placed on the method by which the hydrophilic group is introduced into the particulate polymer Y. For example, a method in which a hydrophilic group-containing monomer is used in polymerization of the particulate polymer Y so as to form a hydrophilic group-containing monomer unit in the obtained particulate polymer Y can be adopted.

### <<Hydrophilic group-containing monomer unit>>

Examples of hydrophilic group-containing monomers that can form the hydrophilic group-containing monomer unit in the particulate polymer Y include acidic group-containing monomers such as carboxy group-containing monomers, sulfo group-containing monomers, and phosphate group-containing monomers and also hydroxy group-containing monomers and the like.

Any of the various acidic group-containing monomers that can be used in production of the previously described polymer X can be used as an acidic group-containing monomer (carboxy group-containing monomer, sulfo group-containing monomer, phosphate group-containing monomer, etc.).

Examples of hydroxy group-containing monomers include alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In the present disclosure, "(meth)allyl" is used to indicate "allyl" and/or "methallyl", and "(meth)acryloyl" is used to indicate "acryloyl" and/or "methacryloyl".

One of the above-described hydrophilic group-containing monomers may be used individually, or two or more of the above-described hydrophilic group-containing monomers may be used together in a freely selected ratio.

Moreover, it is preferable to use an acidic group-containing monomer (carboxy group-containing monomer, sulfo group-containing monomer, phosphate group-containing monomer, etc.) as a hydrophilic group-containing monomer from a viewpoint of even further improving dispersibility of the slurry composition and adhesiveness of a formed electrode mixed material layer, and it is more preferable to use an acidic group-containing monomer and a hydroxy group-containing monomer together, and even more preferable to use a carboxy group-containing monomer and a hydroxy group-containing monomer together as hydrophilic group-containing monomers from a viewpoint of yet further improving adhesiveness of a formed electrode mixed material layer.

### -Proportional content-

The proportional content of the hydrophilic group-containing monomer unit in the particulate polymer Y when all monomer units included in the particulate polymer Y are taken to be 100 mass% is preferably not less than 1 mass% and not more than 10 mass%. When the proportional content of the hydrophilic group-containing monomer unit in the particulate polymer Y is within the specific range set forth above, dispersibility of the slurry composition and adhesiveness and flexibility of a formed electrode mixed material layer can be even further improved.

In a case in which the particulate polymer Y includes both an acidic group-containing monomer unit (carboxy group-containing monomer unit, sulfo group-containing monomer unit, phosphate group-containing monomer unit, etc.) and a hydroxy group-containing monomer unit together as the hydrophilic group-containing monomer unit, the proportional content of the hydrophilic group-containing monomer unit (i.e., the total proportional content of the acidic group-containing monomer unit and the hydroxy group-containing monomer unit) in the particulate polymer Y when all monomer units included in the particulate polymer Y are taken to be 100 mass% is more preferably 2 mass% or more, and even more preferably 3 mass% or more, and is more preferably 5 mass% or less, and even more preferably 4 mass% or less. When the total proportional content of the acidic group-containing monomer unit and the hydroxy group-containing monomer unit in the particulate polymer Y is within any of the specific ranges set forth above, dispersibility of the slurry composition and adhesiveness and flexibility of a formed electrode mixed material layer can be yet further improved.

In a case in which the particulate polymer Y includes an acidic group-containing monomer unit (carboxy group-containing monomer unit, sulfo group-containing monomer unit, phosphate group-containing monomer unit, etc.) as the hydrophilic group-containing monomer unit, the proportional content of the acidic group-containing monomer unit in the particulate polymer Y when all monomer units included in the particulate polymer Y are taken to be 100 mass% is preferably 0.5 mass% or more, more preferably 1 mass% or more, and even more preferably 1.5 mass% or more, and is preferably 5 mass% or less, more preferably 3 mass% or less, and even more preferably 2.5 mass% or less. When the proportional content of the acidic group-containing monomer unit in the particulate polymer Y is not less than any of the lower limits set forth above, dispersibility of the slurry composition and adhesiveness of a formed electrode mixed material layer can be even further improved. On the other hand, when the proportional content of the acidic group-containing monomer unit in the particulate polymer Y is not more than any of the upper limits set forth above, sufficiently high flexibility of a formed electrode mixed material layer can be ensured.

In a case in which the particulate polymer Y includes a hydroxy group-containing monomer unit as the hydrophilic group-containing monomer unit, the proportional content of the hydroxy group-containing monomer unit in the particulate polymer Y when all monomer units included in the particulate polymer Y are taken to be 100 mass% is preferably 0.5 mass% or more, and more preferably 1 mass% or more, and is preferably 5 mass% or less, more preferably 2 mass% or less, and even more preferably 1.5 mass% or less. When the proportional content of the hydroxy group-containing monomer unit in the particulate polymer Y is not less than any of the lower limits set forth above, flexibility of a formed electrode mixed material layer can be even further improved. On the other hand, when the proportional content of the hydroxy group-containing monomer unit in the particulate polymer Y is not more than any of the upper limits set forth above, sufficiently high dispersibility of the slurry composition and adhesiveness of a formed electrode mixed material layer can be ensured

### <<Type of particulate polymer Y>>

It is preferable to use a hydrophilic group-containing acrylic polymer or a hydrophilic group-containing conjugated diene polymer, for example, as the particulate polymer Y including a hydrophilic group, and more preferable to use a hydrophilic group-containing acrylic polymer as the particulate polymer Y including a hydrophilic group from a viewpoint of ensuring sufficiently high cycle characteristics of a secondary battery.

### -Hydrophilic group-containing acrylic polymer-

The hydrophilic group-containing acrylic polymer is a copolymer that includes at least a (meth)acrylic acid ester monomer unit in addition to the hydrophilic group-containing monomer unit described above. The hydrophilic group-containing acrylic polymer preferably further includes a nitrile group-containing monomer unit. Moreover, the hydrophilic group-containing acrylic polymer may further include monomer units other than the hydrophilic group-containing monomer unit, the (meth)acrylic acid ester monomer unit, and the nitrile group-containing monomer unit.

The proportional content of the hydrophilic group-containing monomer unit in the hydrophilic group-containing acrylic polymer can be set within any of the same ranges as the preferred ranges for the proportional content of the hydrophilic group-containing monomer unit in the polymer described above.

Examples of (meth)acrylic acid ester monomers that can form the (meth)acrylic acid ester monomer unit in the hydrophilic group-containing acrylic polymer include (meth)acrylic acid alkyl esters such as methyl acrylate, ethyl acrylate, butyl acrylate, methyl methacrylate, ethyl methacrylate, and 2-ethylhexyl acrylate. Note that one of these (meth)acrylic acid ester monomers may be used individually, or two or more of these (meth)acrylic acid ester monomers may be used in a freely selected ratio.

Also note that in the present specification, "(meth)acryl" is used to indicate "acryl" and/or "methacryl".

The proportional content of the (meth)acrylic acid ester monomer unit in the hydrophilic group-containing acrylic polymer when all monomer units included in the hydrophilic group-containing acrylic polymer are taken to be 100 mass% is preferably 50 mass% or more, more preferably 60 mass% or more, and even more preferably 70 mass% or more, and is preferably 90 mass% or less, more preferably 85 mass% or less, and even more preferably 80 mass% or less. When the proportional content of the (meth)acrylic acid ester monomer unit in the hydrophilic group-containing acrylic polymer is within any of the specific ranges set forth above, adhesiveness and flexibility of a formed electrode mixed material layer can be even further improved.

Any of the previously described nitrile group-containing monomers that can be used to form the polymer X can be used as a nitrile group-containing monomer that can form the nitrile group-containing monomer unit in the hydrophilic group-containing acrylic polymer.

The proportional content of the nitrile group-containing monomer unit in the hydrophilic group-containing acrylic polymer when all monomer units included in the hydrophilic group-containing acrylic polymer are taken to be 100 mass% is preferably 5 mass% or more, more preferably 10 mass% or more, and even more preferably 17 mass% or more, and is preferably 40 mass% or less, more preferably 35 mass% or less, and even more preferably 26 mass% or less. When the proportional content of the nitrile group-containing monomer unit in the hydrophilic group-containing acrylic polymer is within any of the specific ranges set forth above, adhesiveness and flexibility of a formed electrode mixed material layer can be even further improved.

### -Hydrophilic group-containing conjugated diene polymer-

The hydrophilic group-containing conjugated diene polymer is a copolymer that includes a conjugated diene monomer unit in addition to the hydrophilic group-containing monomer unit described above.

Specific examples of the conjugated diene polymer include, but are not specifically limited to, a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR), hydrophilic group-containing butadiene rubber (hydrophilic group-containing BR) (copolymer including a hydrophilic group-containing monomer unit and a butadiene unit), hydrophilic group-containing acrylic rubber (hydrophilic group-containing NBR) (copolymer including a hydrophilic group-containing monomer unit, an acrylonitrile unit, and a butadiene unit), and hydrogenated products thereof. One of these conjugated diene polymers may be used individually, or two or more of these conjugated diene polymers may be used in a freely selected ratio.

In particular, it is preferable to use a copolymer that includes a hydrophilic group-containing monomer unit, an aromatic vinyl monomer unit, and an aliphatic conjugated diene monomer unit such as a hydrophilic group-containing styrene-butadiene copolymer (hydrophilic group-containing SBR) from a viewpoint of even further improving adhesiveness and flexibility of a formed electrode mixed material layer.

The proportional content of the hydrophilic group-containing monomer unit in the hydrophilic group-containing conjugated diene polymer can be set within any of the same ranges as the preferred ranges for the proportional content of the hydrophilic group-containing monomer unit in the polymer described above.

Examples of conjugated diene monomers that can form the conjugated diene monomer unit in the hydrophilic group-containing conjugated diene polymer include conjugated diene compounds such as 1,3-butadiene, isoprene, 2,3-dimethyl-1,3-butadiene, and 1,3-pentadiene. One of these conjugated diene monomers may be used individually, or two or more of these conjugated diene monomers may be used in a freely selected ratio. Of these conjugated diene monomers, 1,3-butadiene is preferable.

The proportional content of the conjugated diene monomer unit in the hydrophilic group-containing conjugated diene polymer when all monomer units included in the hydrophilic group-containing conjugated diene polymer are taken to be 100 mass% is preferably 15 mass% or more, more preferably 20 mass% or more, and even more preferably 25 mass% or more, and is preferably 60 mass% or less, more preferably 50 mass% or less, and even more preferably 40 mass% or less. When the proportional content of the conjugated diene monomer unit in the hydrophilic group-containing conjugated diene polymer is within any of the specific ranges set forth above, adhesiveness and flexibility of a formed electrode mixed material layer can be yet further improved.

Examples of aromatic vinyl monomers that can form the aromatic vinyl monomer unit in the hydrophilic group-containing conjugated diene polymer include styrene, α-methylstyrene, vinyltoluene, and divinylbenzene. One of these aromatic vinyl monomers may be used individually, or two or more of these aromatic vinyl monomers may be used a freely selected ratio. Of these aromatic vinyl monomers, styrene is preferable.

The proportional content of the aromatic vinyl monomer unit in the hydrophilic group-containing conjugated diene polymer when all monomer units included in the hydrophilic group-containing conjugated diene polymer are taken to be 100 mass% is preferably 30 mass% or more, more preferably 45 mass% or more, and even more preferably 56 mass% or more, and is preferably 80 mass% or less, more preferably 75 mass% or less, and even more preferably 71 mass% or less. When the proportional content of the aromatic vinyl monomer unit in the hydrophilic group-containing conjugated diene polymer is within any of the specific ranges set forth above, adhesiveness and flexibility of a formed electrode mixed material layer can be yet further improved.

### <<Production method of particulate polymer Y>>

No specific limitations are placed on the method by which the particulate polymer Y is polymerized. For example, a method such as solution polymerization, suspension polymerization, bulk polymerization, or emulsion polymerization may be adopted. Moreover, addition polymerization such as ionic polymerization, radical polymerization, or living radical polymerization can be adopted as the polymerization reaction. The polymerization may be carried out with a commonly used emulsifier, dispersant, polymerization initiator, chain transfer agent, or the like, and the amount thereof may also be the same as commonly used.

### <<Proportional content in slurry composition>>

Although the proportional content of the particulate polymer Y in the slurry composition can be adjusted as appropriate within a range that yields the desired effects according to the present disclosure, it is preferable that the proportional content of the particulate polymer Y is set as not less than 0.1 mass% and not more than 5 mass% when all solid content contained in the slurry composition is taken to be 100 mass%, for example. When the proportional content of the particulate polymer Y in the slurry composition is not less than the lower limit set forth above, dispersibility of the slurry composition and adhesiveness and flexibility of an electrode mixed material layer can be even further improved. On the other hand, when the proportional content of the polymer Y in the slurry composition is not more than the upper limit set forth above, internal resistance of a secondary battery can be reduced.

### <Conductive material>

The conductive material is a component having a function of ensuring electrical contact among the electrode active material in an electrode mixed material layer.

It is preferable that at least carbon nanotubes are used as the conductive material, and more preferable that carbon nanotubes and a particulate conductive material are used together as the conductive material.

When at least carbon nanotubes are used as the conductive material, internal resistance of a secondary battery can be reduced. Moreover, when carbon nanotubes and a particulate conductive material are used together as the conductive material, internal resistance of a secondary battery can be reduced while also further improving flexibility of an electrode mixed material layer.

Note that conductive materials other than the carbon nanotubes and the particulate conductive material (i.e., other conductive materials) may be used as the conductive material. For example, fibrous conductive materials other than carbon nanotubes can be used as other conductive materials.

### <<Carbon nanotubes>>

Carbon nanotubes can reduce internal resistance of a secondary battery by forming electrical conduction paths in an electrode mixed material layer. Moreover, by using carbon nanotubes, it is also possible to improve cycle characteristics and low-temperature characteristics of a secondary battery.

Any carbon nanotubes (hereinafter, also abbreviated as "CNTs") that yield the desired effects according to the present disclosure can be used as the carbon nanotubes without any specific limitations. Carbon nanotubes may be single-walled (SW) carbon nanotubes or multi-walled (MW) carbon nanotubes depending on the wall format thereof. Moreover, the carbon nanotubes that can be used as the conductive material may be single-walled carbon nanotubes, multi-walled carbon nanotubes, or a combination thereof.

The average number of walls of the CNTs is preferably 10 or less, more preferably 9 or less, even more preferably 8 or less, further preferably 2 or less, and even further preferably 1.5 or less. When the average number of walls of the CNTs is not more than any of the upper limits set forth above, cycle characteristics of a secondary battery can be further improved.

Note that the lower limit for the average number of walls of the CNTs is not specifically limited but is normally 1 or more.

The average diameter of the CNTs is preferably 0.5 nm or more, more preferably 1 nm or more, even more preferably 1.5 nm or more, further preferably 2 nm or more, and even further preferably 2.5 nm or more, and is preferably 20 nm or less, more preferably 12 nm or less, even more preferably 8 nm or less, further preferably 6 nm or less, and even further preferably 4 nm or less. When the average diameter of the CNTs is not less than any of the lower limits set forth above, aggregation of the CNTs can be sufficiently inhibited, and dispersibility of the CNTs as the conductive material can be sufficiently ensured. On the other hand, when the average diameter of the CNTs is not more than any of the upper limits set forth above, the CNTs form good electrical conduction paths in an electrode mixed material layer, further reduce internal resistance of a secondary battery, and can further improve cycle characteristics of a secondary battery. Note that the average diameter of the CNTs can be determined by measuring the diameters (external diameters) of 100 randomly selected CNTs using a transmission electron microscope and calculating an arithmetic average value of the diameters.

A ratio (G/D ratio) of G band peak intensity relative to D band peak intensity in a Raman spectrum of the CNTs is preferably 0.6 or more, more preferably 1.2 or more, even more preferably 2.1 or more, further preferably 3.0 or more, and even further preferably 3.6 or more. When the G/D ratio of the CNTs is not less than any of the lower limits set forth above, cycle characteristics of a secondary battery can be further improved. Note that the upper limit for the G/D ratio of the CNTs is not specifically limited, but may be 200 or less, for example. The G/D ratio can be calculated from the intensity of a G band peak near 1590 cm⁻¹ and the intensity of a D band peak near 1340 cm⁻¹ in a Raman spectrum obtained using a microscopic laser Raman spectrophotometer.

The BET specific surface area of the CNTs is preferably 100 m²/g or more, more preferably 200 m²/g or more, and even more preferably 250 m²/g or more, and is preferably 1,200 m²/g or less, more preferably 1,100 m²/g or less, and even more preferably 1,000 m²/g or less. When the BET specific surface area of the CNTs is within any of the specific ranges set forth above, internal resistance of a secondary battery can be further reduced.

Note that the "BET specific surface area" of CNTs referred to in the present disclosure is the nitrogen adsorption specific surface area measured by the BET method.

### [Production method of carbon nanotubes]

CNTs having the properties set forth above can be produced by a known technique such as arc discharge, laser ablation, or the super growth method without any specific limitations.

### [Proportional content in slurry composition]

Although the proportional content of the CNTs in the slurry composition can be adjusted as appropriate within a range that yields the desired effects according to the present disclosure, it is preferable that the proportional content of the CNTs is set as not less than 0.01 mass% and not more than 0.5 mass% when all solid content contained in the slurry composition is taken to be 100 mass%, for example. When the proportional content of the CNTs in the slurry composition is not less than the lower limit set forth above, internal resistance of a secondary battery can be further reduced. On the other hand, when the proportional content of the CNTs in the slurry composition is not more than the upper limit set forth above, sufficiently high flexibility of an electrode mixed material layer can be ensured.

### <<Particulate conductive material>>

The particulate conductive material is a component that can function as a conductive material in an electrode mixed material layer and that can improve flexibility of the electrode mixed material layer.

The particulate conductive material may be carbon black (for example, acetylene black, Ketjenblack^{®} (Ketjenblack is a registered trademark in Japan, other countries, or both), or furnace black), graphene, or the like without any specific limitations so long as it is a conductive material having a form other than a fibrous form (for example, a spherical or plate-like form). Note that one of these particulate conductive materials may be used individually, or two or more of these particulate conductive materials may be used in combination in a freely selected ratio.

### [Proportional content in slurry composition]

Although the proportional content of the particulate conductive material in the slurry composition can be adjusted as appropriate within a range that yields the desired effects according to the present disclosure, it is preferable that the proportional content of the particulate conductive material is set as not less than 0.1 mass% and not more than 5 mass% when all solid content contained in the slurry composition is taken to be 100 mass%, for example. When the proportional content of the particulate conductive material in the slurry composition is not less than the lower limit set forth above, flexibility of an electrode mixed material layer can be further improved. On the other hand, when the proportional content of the particulate conductive material in the slurry composition is not more than the upper limit set forth above, sufficiently high adhesiveness of an electrode mixed material layer can be ensured.

### <<Mixing ratio of CNTs and particulate conductive material>>

Although no specific limitations are placed on the mixing ratio of the CNTs and the particulate conductive material, the proportion constituted by the content of the CNTs among the total content of the CNTs and the particulate conductive material in the slurry composition, for example, is preferably 1 mass% or more, more preferably 2 mass% or more, and even more preferably 3 mass% or more, and is preferably 30 mass% or less, more preferably 20 mass% or less, and even more preferably 10 mass% or less. When the proportion constituted by the content of the CNTs among the total content of the CNTs and the particulate conductive material is not less than any of the lower limits set forth above, internal resistance of a secondary battery can be further reduced. On the other hand, when the proportion constituted by the content of the CNTs among the total content of the CNTs and the particulate conductive material is not more than any of the upper limits set forth above, flexibility of an electrode mixed material layer can be further improved.

### <Dispersion medium>

The presently disclosed slurry composition normally contains a dispersion medium such as water.

Note that a solvent such as water that was contained in the binder composition used to produce the slurry composition can, for example, be used as at least a portion of the dispersion medium of the presently disclosed slurry composition.

### <Other components>

The presently disclosed slurry composition may further contain other components besides the components described above. Examples of such other components include the same components as the previously described other components that can be contained in the binder composition, for example.

Moreover, the presently disclosed slurry composition may further contain a dispersant as another component. Carboxymethyl cellulose or a salt thereof; an aromatic sulfonic acid-formalin condensate such as a β-naphthalenesulfonic acid-formalin condensate or a salt thereof; or the like can be used as the dispersant. In particular, it is preferable to use an aromatic sulfonic acid-formalin condensate or salt thereof from a viewpoint of further improving adhesiveness of an electrode mixed material layer, and more preferable to use a sodium salt of a β-naphthalenesulfonic acid-formalin condensate.

In a case in which an aromatic sulfonic acid-formalin condensate or salt thereof is used as a dispersant, the proportional content of the aromatic sulfonic acid-formalin condensate or salt thereof in the slurry composition can be set as not less than 0.01 mass% and not more than 0.5 mass% when all solid content contained in the slurry composition is taken to be 100 mass%, for example.

### <Production method of slurry composition>

The presently disclosed slurry composition can be produced by dispersing or dissolving the above-described components in the dispersion medium, for example, but is not specifically limited to being produced in this manner. Specifically, the slurry composition can be produced by mixing the above-described components and the dispersion medium using a mixer such as a ball mill, a sand mill, a bead mill, a pigment disperser, a grinding machine, an ultrasonic disperser, a homogenizer, a planetary mixer, or a FILMIX.

Although water is typically used as the dispersion medium, an aqueous solution of a freely selected compound or a mixed solution of water and a small amount of an organic medium may alternatively be used.

Moreover, in a situation in which a conductive material such as the previously described CNTs and particulate conductive material, for example, is used in production of the presently disclosed slurry composition, the conductive material such as the CNTs and the particulate conductive material can be dispersed in a dispersion medium such as water in advance so as to produce a dispersion liquid, and then this dispersion liquid can be mixed with the electrode active material, the polymer X, and other components such as the particulate polymer Y.

### (Electrode for non-aqueous secondary battery)

The presently disclosed electrode includes an electrode mixed material layer formed using the presently disclosed slurry composition set forth above and normally has a structure in which the electrode mixed material layer is formed on a current collector. Consequently, the electrode mixed material layer contains at least the electrode active material and the polymer X, and optionally further contains the particulate polymer Y, the conductive material, and so forth.

Components such as the electrode active material, the polymer X, the particulate polymer Y, and the conductive material that are contained in the electrode mixed material layer are components that were contained in the slurry composition set forth above, and the preferred proportional content of each of these components is the same as the preferred proportional content of each of these components when all solid content contained in the slurry composition is taken to be 100 mass%.

Moreover, the preferred proportion constituted by the content of the CNTs among the total content of the CNTs and the particulate conductive material that can be contained in the electrode mixed material layer is also the same as the preferred proportion constituted by the content of the CNTs among the total content of the CNTs and the particulate conductive material that can be contained in the slurry composition set forth above.

The presently disclosed electrode may further include a conductive adhesive layer containing at least a conductive material and an adhesive between the current collector and the electrode mixed material layer.

The electrode mixed material layer that is included in the presently disclosed electrode can display excellent adhesiveness and flexibility as a result of being formed using the presently disclosed slurry composition.

Moreover, the electrode mixed material layer that is included in the presently disclosed electrode has a uniform structure as a result of being formed using the presently disclosed slurry composition that has excellent dispersibility. Furthermore, the electrode mixed material layer that is included in the presently disclosed electrode also has excellent flexibility as previously described, which makes it possible to inhibit the occurrence of cracking in a situation in which the electrode is subjected to rolling, folding, or the like in accordance with the shape of a secondary battery during secondary battery production, for example. Consequently, the presently disclosed electrode can reduce internal resistance of a secondary battery as a result of the electrode mixed material layer having a uniform structure and little cracking.

### <Current collector>

A material having electrical conductivity and electrochemical durability is used as the current collector. Specifically, the current collector may, for example, be made of a metal material such as iron, copper, aluminum, nickel, stainless steel, titanium, tantalum, gold, or platinum. Note that one of these materials may be used individually, or two or more of these materials may be used in combination in a freely selected ratio.

In a case in which an electrode that further includes the aforementioned conductive adhesive layer between the electrode mixed material layer and the current collector is to be produced, for example, a conductive adhesive layer-equipped current collector having a conductive adhesive layer formed on a current collector substrate can be used as the current collector.

The current collector substrate may be a current collector formed of a metal material such as previously described, for example.

No specific limitations are placed on the method by which the conductive adhesive layer is formed on the current collector substrate. For example, the conductive adhesive layer can be formed through application and subsequent drying on the current collector substrate of a slurry composition (also referred to as a "conductive adhesive") that contains at least a conductive material and an adhesive dispersed or dissolved in a dispersion medium or solvent such as water and that optionally further contains a dispersant dispersed or dissolved in the dispersion medium or solvent.

The conductive material is not specifically limited, and any of the previously described conductive materials that can be contained in the slurry composition can be used, for example. The adhesive is also not specifically limited, and the previously described particulate polymer Y that can be contained in the slurry composition can be used. The dispersant is also not specifically limited, and a known dispersant such as carboxymethyl cellulose or a salt thereof, for example, can be used.

Moreover, known methods can be adopted without any specific limitations as the method by which the conductive adhesive is applied onto the current collector substrate and the method by which the applied conductive adhesive is dried.

### <Electrode mixed material layer>

The electrode mixed material layer is formed, for example, through a step of applying the slurry composition onto the current collector (application step) and a step of drying the slurry composition that has been applied onto the current collector (drying step).

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry composition coating on the current collector after application but before drying can be set as appropriate in accordance with the thickness of the electrode mixed material layer to be obtained after drying.

### <<Drying step>>

The slurry composition that has been applied onto the current collector can be dried by any commonly known method without any specific limitations. Examples of drying methods that can be used include drying by warm, hot, or low-humidity air; drying in a vacuum; and drying by irradiation with infrared light, an electron beam, or the like. By drying the slurry composition that has been applied onto the current collector in this manner, an electrode mixed material layer can be formed on the current collector, and an electrode including the current collector and the electrode mixed material layer can be obtained.

After the drying step, the electrode mixed material layer may be further subjected to a pressing process, such as mold pressing or roll pressing. This pressing process can improve peel strength of the electrode.

### (Non-aqueous secondary battery)

The presently disclosed secondary battery includes the presently disclosed electrode set forth above. For example, the presently disclosed secondary battery may include a positive electrode, a negative electrode, a separator, and an electrolyte solution, wherein at least one of the positive electrode and the negative electrode is the presently disclosed electrode set forth above. In other words, the presently disclosed secondary battery may be a secondary battery in which the positive electrode is the presently disclosed electrode and the negative electrode is a known negative electrode, may be a secondary battery in which the negative electrode is the presently disclosed electrode and the positive electrode is a known positive electrode, or may be a secondary battery in which the positive electrode and the negative electrode are both the presently disclosed electrode. Since flexibility can particularly be an issue in the case of a positive electrode mixed material layer, it is preferable for at least the positive electrode of the presently disclosed secondary battery to be the presently disclosed electrode from a viewpoint of further improving flexibility of a positive electrode mixed material layer as an electrode mixed material layer.

The presently disclosed secondary battery has reduced internal resistance as a result of including the presently disclosed electrode set forth above.

Although the following describes, as one example, a case in which the non-aqueous secondary battery is a lithium ion secondary battery, the presently disclosed non-aqueous secondary battery is not limited to the following example.

### <Positive electrode>

The positive electrode can be the presently disclosed electrode set forth above, though no specific limitations are made. In other words, the positive electrode can be a positive electrode that includes a current collector and a positive electrode mixed material layer formed from the presently disclosed slurry composition, for example.

In a case in which the presently disclosed electrode is not used as the positive electrode, any known positive electrode can be used as the positive electrode.

### <Negative electrode>

The negative electrode can be the presently disclosed electrode set forth above, though no specific limitations are made. In other words, the negative electrode can be a negative electrode that includes a current collector and a negative electrode mixed material layer formed from the presently disclosed slurry composition, for example.

In a case in which the presently disclosed electrode is not used as the negative electrode, any known negative electrode can be used as the negative electrode.

### <Separator>

The separator is not specifically limited and may be a microporous membrane in which a polyolefinic (polyethylene, polypropylene, polybutene, or polyvinyl chloride) resin is used, a microporous membrane in which a resin such as polyethylene terephthalate, polycycloolefin, polyether sulfone, polyamide, polyimide, polyimide amide, polyaramid, polycycloolefin, nylon, or polytetrafluoroethylene is used, a woven or non-woven fabric in which polyolefinic fiber is used, an assembly of particles formed of an insulating substance, or the like, for example. Of these examples, a microporous membrane in which a polyolefinic (polyethylene, polypropylene, polybutene, or polyvinyl chloride) resin is used is preferable in terms that the total thickness of the separator can be reduced, which can thereby increase the ratio of an electrode mixed material layer in the secondary battery and increase the volumetric capacity.

### <Electrolyte solution>

An electrolyte solution that is obtained by dissolving an electrolyte in a solvent can be used as the electrolyte solution.

The solvent may be an organic solvent in which the electrolyte can dissolve. Specifically, examples of solvents that may suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Moreover, a known additive such as vinylene carbonate (VC), fluoroethylene carbonate (FEC), or ethyl methyl sulfone, for example, may be added to the solvent.

The electrolyte may be a lithium salt. Examples of lithium salts that can be used include compounds described in JP2012-204303A. Of these lithium salts, LiPF₆, LiClO₄, and CF₃SO₃Li are preferred as electrolytes because they readily dissolve in organic solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The presently disclosed secondary battery can be produced by a known assembly method without any specific limitations. Specifically, the presently disclosed secondary battery can be produced by, for example, performing rolling, folding, or the like of the negative electrode, positive electrode, and separator obtained as described above in accordance with the battery shape, as necessary, to place these battery members inside of a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

Note that battery members such as the positive electrode, the negative electrode, and the separator that are included in the secondary battery are typically arranged such that the positive electrode is in contact with one side of the separator and the negative electrode is in contact with the other side of the separator. More specifically, the positive electrode mixed material layer is arranged at one side of the separator and the negative electrode mixed material layer is arranged at the other side of the separator such as to be in contact with the separator.

### EXAMPLES

The following provides a specific description of the present disclosure based on examples. However, the present disclosure is not limited to these examples. In the following description, "%" and "parts" used in expressing quantities are by mass, unless otherwise specified.

Note that in the case of a polymer that is obtained through polymerization of a plurality of types of monomers, the proportional content in the polymer of a monomer unit that is formed through polymerization of a given monomer is normally, unless otherwise specified, the same as the ratio (charging ratio) of the given monomer among all monomers used in polymerization of the polymer.

Various measurements and evaluations were performed by the following methods.

### <Weight-average molecular weight and molecular weight distribution>

The weight-average molecular weight (Mw) and number-average molecular weight (Mn) of an obtained polymer X were measured by gel permeation chromatography (GPC), and then the molecular weight distribution (Mw/Mn) was calculated.

First, an aqueous solution containing the polymer was diluted to 0.1 mass% with an eluent indicated below to obtain a measurement sample. Specifically, the polymer X was added to 5 mL of the eluent and, at 25°C, a stirring bar was placed therein and 30 minutes of stirring was performed at 300 rpm using a magnetic stirrer to cause dissolution of the polymer X. The resultant solution was then diluted through addition of the eluent such that the solid content concentration of the polymer X was 0.1 mass%, and was subsequently filtered by a 0.45 µm membrane filter to yield a filtrate that was taken as a sample. The obtained sample was used to perform GPC under the following measurement conditions.
Column: TSKgel^{®} (TSKgel is a registered trademark in Japan, other countries, or both) GMPWXL × 2 (7.8 mm (internal diameter) × 300 mm (length) × 2 columns)
Eluent: 0.1 M sodium nitrate aqueous solution/acetonitrile = 80/20 (volume ratio)
Flow rate: 1.0 mL/min
Detector: Differential refractive index detector RI (produced by Tosoh Corporation; product name: HLC-8320GPC)
Column temperature: 40°C
Injection volume: 100 µL
Molecular weight standard: Standard polyethylene oxide (PEO) and standard polyethylene glycol (PEG)
Sample concentration: 0.1 mass%

### <Dispersibility of slurry composition>

The viscosity of a slurry composition for a positive electrode was measured in accordance with JIS Z8803:1991 under conditions of a rotation speed of 60 rpm and a temperature of 25°C using a single-cylinder rotational viscometer (Brookfield B-type viscometer) and was confirmed to be within a range of 2,500 mPa·s to 3,500 mPa·s. Dispersibility of the slurry composition for a positive electrode was then evaluated in accordance with the following standard based on the value of the solid content concentration of the slurry composition for a positive electrode having a viscosity in the aforementioned range. Note that a larger value for solid content concentration in the same viscosity range (2,500 mPa·s to 3,500 mPa·s) for the same type of slurry composition indicates that solid content contained in the slurry composition is better dispersed, and thus indicates that the slurry composition has better dispersibility.
A: Solid content concentration of 50% or more
B: Solid content concentration of not less than 45% and less than 50%
C: Solid content concentration of not less than 40% and less than 45%
D: Solid content concentration of less than 40% or not dispersed (no fluidity)

### <Adhesiveness of positive electrode mixed material layer>

A positive electrode for a lithium ion secondary battery was cut out as a rectangular shape of 1.0 cm in width by 10 cm in length to obtain a test specimen. Cellophane tape (tape prescribed by JIS Z1522) was affixed to the surface at the positive electrode mixed material layer-side of the test specimen, and then the stress when the cellophane tape was pulled and peeled off in a direction at 90° and at a speed of 50 mm/min from one end of the test specimen was measured. A total of three measurements were made in this manner. An average value of the measurements was determined, was taken to be the peel strength (N/m), and was evaluated by the following standard. A larger peel strength indicates that the positive electrode mixed material layer has better adhesiveness and is closely adhered more strongly to the current collector.
A+: Peel strength of 23 N/m or more
A: Peel strength of not less than 20 N/m and less than 23 N/m
B: Peel strength of not less than 15 N/m and less than 20 N/m
C: Peel strength of not less than 10 N/m and less than 15 N/m
D: Peel strength of less than 10 N/m

### <Flexibility of positive electrode mixed material layer>

A cylindrical rod made of SUS was placed at the positive electrode mixed material layer-side of a positive electrode for a lithium ion secondary battery, the positive electrode was wound around the cylindrical rod, and the occurrence of cracking of the positive electrode mixed material layer was visually evaluated. This was performed using cylindrical rods of different diameters (cylindrical rod of 5.0 cm in diameter, cylindrical rod of 7.5 cm in diameter, and cylindrical rod of 10.0 cm in diameter). A smaller diameter for the smallest SUS cylindrical rod with which the positive electrode mixed material layer is preserved without cracking when the positive electrode is wound around that SUS cylindrical rod indicates that the positive electrode mixed material layer has better flexibility.
A: No cracking with all of cylindrical rods of 5.0 cm, 7.5 cm, and 10.0 cm in diameter
B: Cracking with cylindrical rod of 5.0 cm in diameter but no cracking with cylindrical rods of 7.5 cm and 10.0 cm in diameter
C: Cracking with cylindrical rods of 5.0 cm and 7.5 cm in diameter but no cracking with cylindrical rod of 10.0 cm in diameter
D: Cracking with all of cylindrical rods of 5.0 cm, 7.5 cm, and 10.0 cm in diameter

### <Internal resistance>

A lithium ion secondary battery was charged to an SOC (State Of Charge) of 50% at 1C (C is a value expressed by rated capacity (mA)/1 hour (h)) in a 25°C atmosphere. Thereafter, the lithium ion secondary battery was subjected to 20 seconds of charging and 20 seconds of discharging centered on the SOC of 50% at each of 0.2C, 0.5C, 1.0C, 2.0C, and 3.0C in a 25°C environment. The battery voltage after 20 seconds in each case (charging side and discharging side) was plotted against the current value, and the gradient of this plot was determined as the IV resistance (Ω) (IV resistance during charging and IV resistance during discharging). The obtained IV resistance value (Ω) was evaluated by the following standard. A smaller value for the IV resistance indicates that the lithium ion secondary battery has less internal resistance.
A: IV resistance of less than 10 Ω
B: IV resistance of not less than 10 Ω and less than 15 Ω
C: IV resistance of not less than 15 Ω and less than 20 Ω
D: IV resistance of 20 Ω or more

### (Example 1)

### <Production of binder composition (aqueous solution of polymer X)>

A 10 L septum-equipped flask was charged with 770 parts of deionized water. Heating was performed to a temperature of 40°C, and the inside of the flask was purged with nitrogen gas at a flow rate of 100 mL/min. Next, 6 parts of acrylic acid as an ethylenically unsaturated carboxylic acid monomer, 20 parts of 2-hydroxyethyl methacrylate (HEMA) as a hydroxy group-containing methacrylic acid ester monomer, and 74 parts of 2-hydroxyethyl acrylate (β-HEA) as a hydroxy group-containing acrylic acid ester monomer were mixed and were injected into the flask using a syringe. Thereafter, 3 parts of a 10.0% aqueous solution of sodium L-ascorbate as a polymerization accelerator was charged to the flask using a syringe, and, 10 minutes later, 38 parts of a 4.0% aqueous solution of potassium persulfate as a polymerization initiator was added into the flask using a syringe. At 1 hour after the start of the reaction, the temperature was raised to 55°C, and the polymerization reaction was caused to proceed. After 2 hours, 0.5 parts of a 10.0% aqueous solution of sodium hydrogen sulfite as a polymerization accelerator was charged into the flask using a syringe, and, 10 minutes later, 5 parts of a 4.0% aqueous solution of potassium persulfate as a polymerization initiator was added into the flask using a syringe. After 3 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 4 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 5 hours, 0.5 parts of a 10.0% aqueous solution of sodium hydrogen sulfite as a polymerization accelerator was charged to the flask using a syringe, and, 10 minutes later, 5 parts of a 4.0% aqueous solution of potassium persulfate as a polymerization initiator was added into the flask using a syringe. After 6 hours, a reaction inhibitor was added, and the flask was opened to air to stop the polymerization reaction. The product was subsequently adjusted to pH 8 using an 8% aqueous solution of lithium hydroxide to yield an aqueous solution of a polymer X as a binder composition.

Note that the polymerization conversion rate of monomers in the polymerization reaction was approximately 100% and that the chemical composition (proportional content of each monomer unit) of the obtained polymer X was the same as the ratio (charging ratio) of each monomer among all monomers used in polymerization of the polymer X. Moreover, the obtained polymer X was water-soluble according to the definition in the present specification.

### <Production of particulate polymer Y>

A hydrophilic group-containing acrylic polymer was produced as a particulate polymer Y as follows.

A 1 L septum-equipped flask (reactor) including a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 76 parts of 2-ethylhexyl acrylate as a (meth)acrylic acid ester monomer, 2.5 parts of itaconic acid as a carboxy group-containing monomer, 1.5 parts of 2-hydroxyethyl acrylate (β-HEA) as a hydroxy group-containing monomer, and 20 parts of acrylonitrile as a nitrile group-containing monomer. The monomer composition was continuously added into the 1 L septum-equipped flask over 3 hours to perform polymerization. The reaction was carried out at 60°C during the addition. Once the addition was complete, a further 2 hours of stirring was performed at 80°C.

The resultant water dispersion containing a polymer was adjusted to pH 8 through addition of 5% sodium hydroxide aqueous solution to yield a water dispersion of a particulate polymer Y (hydrophilic group-containing acrylic polymer).

### <Production of CNT dispersion liquid>

A CNT dispersion liquid having a solid content concentration of 1 mass% was produced by using a disper blade to stir (3,000 rpm, 10 minutes) 0.4 parts of carbon nanotubes (BET specific surface area: 250 m²/g) as a conductive material, 0.6 parts (in terms of solid content) of carboxymethyl cellulose (produced by Daicel Corporation; product name: DAICEL 1220), and 99 parts of deionized water, and subsequently using a bead mill in which zirconia beads of 1 mm in diameter were used to perform 1 hour of mixing at a circumferential speed of 8 m/s.

### <Production of acetylene black dispersion liquid>

An acetylene black dispersion liquid having a solid content concentration of 5 mass% was produced by using a disper blade to stir (3,000 rpm, 60 minutes) 4.4 parts of acetylene black as a conductive material, 0.6 parts (in terms of solid content) of carboxymethyl cellulose (produced by Daicel Corporation; product name: DAICEL 1220), and 95 parts of deionized water.

### <Production of slurry composition for positive electrode>

After adding together 94.8 parts of olivine-type lithium iron phosphate (LiFePO₄) (average particle diameter: 1 µm) as a positive electrode active material, 1.2 parts (in terms of solid content) of the aqueous solution of the polymer X as a binder composition, and deionized water, these materials were adjusted to a solid content concentration of 78% and were mixed (60 rpm, 50 minutes) in a planetary mixer.

Next, the acetylene black dispersion liquid was added such that the additive amount of acetylene black was 1.9 parts and was mixed (60 rpm, 10 minutes) in the planetary mixer. Next, the CNT dispersion liquid was added such that the additive amount of carbon nanotubes was 0.1 parts and was mixed (60 rpm, 10 minutes) in the planetary mixer. Finally, 1.5 parts (in terms of solid content) of the water dispersion of the particulate polymer Y was added and was mixed (40 rpm, 10 minutes) in the planetary mixer to produce a slurry composition for a positive electrode. Note that in production of the slurry composition for a positive electrode, the viscosity of the obtained slurry composition for a positive electrode (measured by single-cylinder rotational viscometer (Brookfield B-type viscometer) in accordance with JIS Z8803:1991; temperature: 25°C; rotation speed: 60 rpm) was adjusted to within a range of 2,500 mPa·s to 3,500 mPa·s through addition of water.

Dispersibility of the obtained slurry composition for a positive electrode was evaluated. The result is shown in Table 1.

### <Production of conductive adhesive layer-equipped current collector>

A conductive adhesive layer-equipped current collector produced by a method described below was used as a current collector used in production of a positive electrode.

A conductive adhesive was produced by adding together 70 parts of conductive carbon (graphite/acetylene black = 70/30 (mass ratio)) and 8 parts of carboxymethyl cellulose (produced by Daicel Corporation; product name: DAICEL 1220) as a dispersant, stirring these materials at 3,000 rpm for 60 minutes using a disper blade, subsequently adding 22 parts in terms of solid content of the water dispersion of the particulate polymer Y, and performing a further 10 minutes of stirring at 1,500 rpm using the disper blade.

The conductive adhesive was applied onto aluminum foil serving as a current collector substrate by casting using a roll bar with a forming rate of 20 m/min and was then dried at 80°C to form a conductive adhesive layer of 1 µm in thickness. In this manner, a conductive adhesive layer-equipped current collector having a conductive adhesive layer formed on the current collector substrate was obtained.

### <Production of positive electrode for lithium ion secondary battery>

The slurry composition for a positive electrode obtained as described above was applied onto the surface at the conductive adhesive layer-side of the conductive adhesive layer-equipped current collector by a comma coater such as to have a mass per unit area after drying of 22 mg/cm², was dried at 90°C for 20 minutes and at 120°C for 20 minutes, and was subsequently heat treated at 60°C for 10 hours to obtain a positive electrode web. The positive electrode web was rolled by roll pressing to produce a sheet-shaped positive electrode including a positive electrode mixed material layer of 2.5 g/cm³ in density, a conductive adhesive layer, and aluminum foil. The sheet-shaped positive electrode was cut to 48.0 mm in width and 47 cm in length to obtain a positive electrode for a lithium ion secondary battery.

The obtained positive electrode for a lithium ion secondary battery was used to evaluate adhesiveness and flexibility of the positive electrode mixed material layer. The results are shown in Table 1.

### <Production of negative electrode for lithium ion secondary battery>

A 5 MPa pressure-resistant vessel equipped with a stirrer was charged with 65 parts of styrene as an aromatic vinyl monomer, 35 parts of 1,3-butadiene as an aliphatic conjugated diene monomer, 2 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. The water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to 30°C or lower to yield a water dispersion of a particulate polymer as a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion of the particulate polymer as a binder for a negative electrode that was obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 ± 0.5 mg/cm². Thereafter, the copper foil with the slurry composition for a negative electrode applied thereon was conveyed inside an oven having a temperature of 80°C for 2 minutes and an oven having a temperature of 110°C for 2 minutes at a speed of 400 mm/min so as to dry the slurry composition for a negative electrode on the copper foil and obtain a negative electrode web having a negative electrode mixed material layer formed on the current collector.

This negative electrode web was rolled by roll pressing to produce a sheet-shaped negative electrode including a negative electrode mixed material layer of 1.6 g/cm³ in density and copper foil. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up using a core of 20 mm in diameter with the respective electrode mixed material layers thereof facing each other and with a separator of 15 µm in thickness (microporous membrane made of polyethylene) interposed therebetween to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside of a laminate case made of aluminum together with 3.2 g of the electrolyte solution. After connecting a nickel lead at a specific position on the negative electrode for a secondary battery and connecting an aluminum lead at a specific position on the positive electrode for a lithium ion secondary battery, an opening of the case was thermally sealed to obtain a lithium ion secondary battery. This lithium ion secondary battery had a pouch shape of 35 mm in width, 60 mm in height, and 5 mm in thickness. The nominal capacity of the battery was 700 mAh.

The internal resistance of the obtained lithium ion secondary battery was evaluated. The result is shown in Table 1.

### (Examples 2 to 8 and 13 and Comparative Examples 1 to 5, 8, and 9)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that the types and/or amounts of monomers added in production of the polymer X as the binder composition were changed such that the chemical composition (proportional content of each monomer unit) of the obtained polymer X was as indicated in Table 1. The results are shown in Tables 1 to 3.

### (Example 9)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that the additive amount in the first addition of the 4.0% aqueous solution of potassium persulfate as a polymerization initiator was changed from 38 parts to 32 parts in production of the polymer X as the binder composition. The results are shown in Table 2.

### (Example 10)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that 0.5 parts of 1-thioglycerol as a chain transfer agent was added and stirred prior to addition of 3 parts of the 10.0% aqueous solution of sodium L-ascorbate as a polymerization accelerator and that the additive amount in the first addition of the 4.0% aqueous solution of potassium persulfate as a polymerization initiator was changed from 38 parts to 45 parts in production of the polymer X as the binder composition. The results are shown in Table 2.

### (Example 11)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that production of the particulate polymer Y was carried out as described below. The results are shown in Table 2.

### <Production of particulate polymer Y>

A hydrophilic group-containing styrene-butadiene copolymer (hydrophilic group-containing SBR) was produced as a particulate polymer Y as follows.

A 5 MPa pressure-resistant vessel equipped with a stirrer was charged with 63 parts of styrene as an aromatic vinyl monomer, 34 parts of 1,3-butadiene as a conjugated diene monomer, 2 parts of itaconic acid as a carboxy group-containing monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to 55°C to initiate polymerization.

Cooling was performed to quench the reaction at the point at which monomer consumption reached 95.0%. The water dispersion containing a polymer that was obtained in this manner was adjusted to pH 8 through addition of 5% sodium hydroxide aqueous solution. Unreacted monomer was subsequently removed by thermal-vacuum distillation. Thereafter, the water dispersion was cooled to 30°C or lower to yield a water dispersion of hydrophilic group-containing SBR as a particulate polymer.

### (Example 12)

Production of a binder composition (aqueous solution of a polymer X), production of a particulate polymer Y, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that a CNT dispersion liquid was not added and that the additive amount of the acetylene black dispersion liquid was changed such that the additive amount of acetylene black changed from 1.9 parts to 3.0 parts in production of the slurry composition for a positive electrode. The results are shown in Table 2.

### (Example 14)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that the additive amount of the aqueous solution of the polymer X as the binder composition was changed from 1.2 parts to 1.1 parts in terms of solid content and that 0.1 parts of a sodium salt of a β-naphthalenesulfonic acid-formalin condensate as a dispersant was further added in production of the slurry composition for a positive electrode. The results are shown in Table 2.

### (Example 15)

Production of a binder composition (aqueous solution of a polymer X), production of a particulate polymer Y, production of a CNT dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that the additive amount of olivine-type lithium iron phosphate (LiFePO₄) as a positive electrode active material was changed from 94.8 parts to 96.2 parts, that an acetylene black dispersion liquid (amount equivalent to 1.9 parts of acetylene black) was not added, and that the additive amount of the CNT dispersion liquid was changed such that the additive amount of carbon nanotubes changed from 0.1 parts to 0.5 parts in production of the slurry composition for a positive electrode. The results are shown in Table 2.

### (Comparative Example 6)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that the additive amount in the first addition of the 4.0% aqueous solution of potassium persulfate as a polymerization initiator was changed from 38 parts to 25 parts in production of the polymer X as the binder composition. The results are shown in Table 3.

### (Comparative Example 7)

Production of a binder composition (aqueous solution of a polymer X), production of a particulate polymer Y, production of a CNT dispersion liquid, production of an acetylene black dispersion liquid, production of a slurry composition for a positive electrode, production of a conductive adhesive layer-equipped current collector, production of a positive electrode for a lithium ion secondary battery, production of a negative electrode for a lithium ion secondary battery, and production of a lithium ion secondary battery were carried out and various measurements and evaluations were performed in the same way as in Example 1 with the exception that 2 parts of 1-thioglycerol as a chain transfer agent was added and stirred prior to addition of 3 parts of the 10.0% aqueous solution of sodium L-ascorbate as a polymerization accelerator and that the additive amount in the first addition of the 4.0*%* aqueous solution of potassium persulfate as a polymerization initiator was changed from 38 parts to 45 parts in production of the polymer X as the binder composition. The results are shown in Table 3.

Note that in Tables 1 to 3, shown below:
"AA" indicates acrylic acid unit;
"NaSS" indicates sodium styrenesulfonate unit;
"β-HEA" indicates 2-hydroxyethyl acrylate unit;
"4HBA" indicates 4-hydroxybutyl acrylate unit;
"HPA" indicates 2-hydroxypropyl acrylate unit;
"HEMA" indicates 2-hydroxyethyl methacrylate unit;
"HPMA" indicates 2-hydroxypropyl methacrylate unit;
"Aamid" indicates acrylamide unit;
"AN" indicates acrylonitrile unit;
"ACR" indicates hydrophilic group-containing acrylic polymer;
"SBR" indicates hydrophilic group-containing styrene-butadiene copolymer;
"CNT" indicates carbon nanotubes;
"AcB" indicates acetylene black; and
"NASF" indicates sodium salt of β-naphthalenesulfonic acid-formalin condensate.

Also note that in Table 1, "β-HEA/4HBA" for the type and "64/10" for the proportional content of a hydroxy group-containing acrylic acid ester monomer unit in the polymer X in Example 2 indicate that the polymer X includes 64 mass% of 2-hydroxyethyl acrylate units and 10 mass% of 4-hydroxybutyl acrylate units.

**[Table 1]**

| | | | | Example 1 | Example 2 | Example 3 | Example 4 | Example 5 | Example 6 | Example 7 | Example 8 |
|---|---|---|---|---|---|---|---|---|---|---|---|
| Slurry composition for positive electrode | Polymer X (binder composition) | Acidic group-containing monomer unit | Type | AA | AA | NaSS | AA | AA | AA | AA | AA |
| | | | Proportional content [mass*%*] | 6 | 6 | 6 | 6 | 6 | 9.5 | 3.5 | 9 |
| | | Hydroxy group-containing acrylic acid ester monomer unit | Type | β-HEA | β-HEA/ 4HBA | β-HEA | HPA | β-HEA | β-HEA | β-HEA | β-HEA |
| | | | Proportional content [mass*%*] | 74 | 64/10 | 74 | 74 | 74 | 75.5 | 71.5 | 60 |
| | | Hydroxy group-containing methacrylic acid ester monomer unit | Type | HEMA | HEMA | HEMA | HEMA | HPMA | HEMA | HEMA | HEMA |
| | | | Proportional content [mass*%*] | 20 | 20 | 20 | 20 | 20 | 15 | 25 | 11 |
| | | Total proportional content of hydroxy group-containing acrylic acid ester monomer unit and hydroxy group-containing methacrylic acid ester monomer unit [mass*%*] | | 94 | 94 | 94 | 94 | 94 | 90.5 | 96.5 | 71 |
| | | Other monomer unit | Type | - | - | - | - | - | - | - | Aamid |
| | | | Proportional content [mass*%*] | - | - | - | - | - | - | - | 20 |
| | | Weight-average molecular weight (Mw) | | *250000* | *250000* | 220000 | 210000 | *150000* | *250000* | 280000 | *250000* |
| | | Molecular weight distribution (Mw/Mn) | | 10 | 10 | 9 | 10 | 8 | 12 | 9 | 13 |
| | Particulate polymer Y (particulate polymer including hydrophilic group) | | Type | ACR | ACR | ACR | ACR | ACR | ACR | ACR | ACR |
| | Conductive material | | Type | CNT + AcB | CNT + AcB | CNT + AcB | CNT + AcB | CNT + AcB | CNT + AcB | CNT + AcB | CNT + AcB |
| | Dispersant | | Type | - | - | - | - | - | - | - | - |
| Evaluation results | | Dispersibility | | A | A | A | A | A | A | B | A |
| | | Adhesiveness | | A | A | A | A | A | A | B | B |
| | | Flexibility | | A | A | A | A | A | B | A | B |
| | | Internal resistance | | A | A | A | A | A | B | B | B |

**[Table 2]**

| | | | | Example 9 | Example 10 | Example 11 | Example 12 | Example 13 | Example 14 | Example 15 |
|---|---|---|---|---|---|---|---|---|---|---|
| Slurry composition for positive electrode | Polymer X (binder composition) | Acidic group-containing monomer unit | Type | AA | AA | AA | AA | AA | AA | AA |
| | | | Proportional content [mass%] | 6 | 6 | 6 | 6 | 6 | 6 | 6 |
| | | Hydroxy group-containing acrylic acid ester monomer unit | Type | β-HEA | β-HEA | β-HEA | β-HEA | β-HEA | β-HEA | β-HEA |
| | | | Proportional content [mass%] | 74 | 74 | 74 | 74 | 73 | 74 | 74 |
| | | Hydroxy group-containing methacrylic acid ester monomer unit | Type | HEMA | HEMA | HEMA | HEMA | HEMA | HEMA | HEMA |
| | | | Proportional content [mass%] | 20 | 20 | 20 | 20 | 19 | 20 | 20 |
| | | Total proportional content of hydroxy group-containing acrylic acid ester monomer unit and hydroxy group-containing methacrylic acid ester monomer unit [mass%] | | 94 | 94 | 94 | 94 | 94 | 94 | 94 |
| | | Other monomer unit | Type | - | - | - | - | AN | - | - |
| | | | Proportional content [mass%] | - | - | - | - | 2 | - | - |
| | | Weight-average molecular weight (Mw) | | 450000 | 70000 | 250000 | 250000 | 250000 | 250000 | 250000 |
| | | Molecular weight distribution (Mw/Mn) | | 10 | 10 | 10 | 10 | 10 | 10 | 10 |
| | Particulate polymer Y (particulate polymer including hydrophilic group) | | Type | ACR | ACR | SBR | ACR | ACR | ACR | ACR |
| | Conductive material | | Type | CNT + AcB | CNT + AcB | CNT + AcB | Only AcB | CNT + AcB | CNT + AcB | Only CNT |
| | Dispersant | | Type | - | - | - | - | - | NASF | - |
| Evaluation results | | Dispersibility | | B | A | A | A | A | A | A |
| | | Adhesiveness | | A | B | A | A | A | A+ | B |
| | | Flexibility | | A | A | A | A | A | A | B |
| | | Internal resistance | | B | A | A | B | A | A | A |

**[Table 3]**

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| Slurry composition for positive electrode | Polymer X (binder composition) | Acidic group-containing monomer unit | Type | AA | AA | AA | AA | AA | AA | AA | AA | AA |
| | | | Proportional content [mass%] | 10 | 2 | 9 | 6 | 3 | 6 | 6 | 6 | 6 |
| | | Hydroxy group-containing acrylic acid ester monomer unit | Type | β-HEA | β-HEA | β-HEA | β-HEA | β-HEA | β-HEA | β-HEA | β-HEA | - |
| | | | Proportional content [mass%] | 65 | 73 | 50 | 59 | 92 | 74 | 74 | 94 | - |
| | | Hydroxy group-containing methacrylic acid ester monomer unit | Type | HEMA | HEMA | HEMA | HEMA | HEMA | HEMA | HEMA | - | HEMA |
| | | | Proportional content [mass%] | 25 | 25 | 5 | 35 | 5 | 20 | 20 | - | 94 |
| | | Total proportional content of hydroxy group-containing acrylic acid ester monomer unit and hydroxy group-containing methacrylic acid ester monomer unit [mass*%*] | | 90 | 98 | 55 | 94 | 97 | 94 | 94 | 94 | 94 |
| | | Other monomer unit | Type | - | - | Aamid | - | - | - | - | - | - |
| | | | Proportional content [mass%] | - | - | 36 | - | - | - | - | - | - |
| | | Weight-average molecular weight (Mw) | | 250000 | 250000 | 250000 | 270000 | 250000 | 550000 | 10000 | 280000 | 260000 |
| | | Molecular weight distribution (Mw/Mn) | | 10 | 10 | 10 | 10 | 10 | 10 | 10 | 10 | 10 |
| | Particulate polymer Y (particulate polymer including hydrophilic group) | | Type | ACR | ACR | ACR | ACR | ACR | ACR | ACR | ACR | ACR |
| | Conductive material | | Type | CNT + AcB | CNT + AcB | CNT + AcB | CNT + AcB | CNT + AcB | CNT + AcB | CNT + AcB | CNT + AcB | CNT + AcB |
| | Dispersant | | Type | - | - | - | - | - | - | - | - | - |
| Evaluation results | | Dispersibility | | C | D | D | C | C | D | C | C | C |
| | | Adhesiveness | | D | D | D | D | C | C | D | D | C |
| | | Flexibility | | D | C | D | D | D | D | D | C | D |
| | | Internal resistance | | D | D | D | D | D | D | D | D | D |

It can be seen from Tables 1 to 3 that it is possible to produce a slurry composition for a non-aqueous secondary battery electrode having excellent dispersibility and to form an electrode mixed material layer having excellent adhesiveness and flexibility when using the binder compositions of Examples 1 to 15, which each contain a polymer X that includes an acidic group-containing monomer unit, a hydroxy group-containing acrylic acid ester monomer unit, and a hydroxy group-containing methacrylic acid ester monomer unit in specific proportions, that has a total proportional content of the hydroxy group-containing acrylic acid ester monomer unit and the hydroxy group-containing methacrylic acid ester monomer unit that is within a specific range, and that has a weight-average molecular weight that is within a specific range.

On the other hand, it can be seen that dispersibility of a produced slurry composition is poor and that adhesiveness and flexibility of an electrode mixed material layer are poor when using the binder composition of Comparative Example 1 in which the proportional content of an acidic group-containing monomer unit in a polymer X exceeds a specific range.

It can also be seen that dispersibility of a produced slurry composition is poor and that adhesiveness and flexibility of an electrode mixed material layer are poor when using the binder composition of Comparative Example 2 in which the proportional content of an acidic group-containing monomer unit in a polymer X falls below a specific range and in which the total proportional content of a hydroxy group-containing acrylic acid ester monomer unit and a hydroxy group-containing methacrylic acid ester monomer unit in the polymer X exceeds a specific range.

It can also be seen that dispersibility of a produced slurry composition is poor and that adhesiveness and flexibility of an electrode mixed material layer are poor when using the binder composition of Comparative Example 3 in which the proportional content of a hydroxy group-containing acrylic acid ester monomer unit in a polymer X falls below a specific range and in which the total proportional content of the hydroxy group-containing acrylic acid ester monomer unit and a hydroxy group-containing methacrylic acid ester monomer unit in the polymer X also falls below a specific range.

It can also be seen that dispersibility of a produced slurry composition is poor and that adhesiveness and flexibility of an electrode mixed material layer are poor when using the binder composition of Comparative Example 4 in which the proportional content of a hydroxy group-containing methacrylic acid ester monomer unit in a polymer X exceeds a specific range.

It can also be seen that dispersibility of a produced slurry composition is poor and that adhesiveness and flexibility of an electrode mixed material layer are poor when using the binder composition of Comparative Example 5 in which the proportional content of a hydroxy group-containing acrylic acid ester monomer unit in a polymer X exceeds a specific range.

It can also be seen that dispersibility of a produced slurry composition is poor and that adhesiveness and flexibility of an electrode mixed material layer are poor when using the binder composition of Comparative Example 6 in which the weight-average molecular weight of a polymer X exceeds a specific range.

It can also be seen that dispersibility of a produced slurry composition is poor and that adhesiveness and flexibility of an electrode mixed material layer are poor when using the binder composition of Comparative Example 7 in which the weight-average molecular weight of a polymer X falls below a specific range.

It can also be seen that dispersibility of a produced slurry composition is poor and that adhesiveness and flexibility of an electrode mixed material layer are poor when using the binder composition of Comparative Example 8 in which a polymer X does not include a hydroxy group-containing methacrylic acid ester monomer unit.

It can also be seen that dispersibility of a produced slurry composition is poor and that adhesiveness and flexibility of an electrode mixed material layer are poor when using the binder composition of Comparative Example 9 in which a polymer X does not include a hydroxy group-containing acrylic acid ester monomer unit.

### INDUSTRIAL APPLICABILITY

According to the present disclosure, it is possible to provide a binder composition for a non-aqueous secondary battery electrode that is capable of producing a slurry composition for a non-aqueous secondary battery electrode having excellent dispersibility and that can cause an electrode mixed material layer to display excellent adhesiveness and flexibility.

Moreover, according to the present disclosure, it is possible to provide a slurry composition for a non-aqueous secondary battery electrode that has excellent dispersibility and that can cause an electrode mixed material layer to display excellent adhesiveness and flexibility.

Furthermore, according to the present disclosure, it is possible to provide an electrode for a non-aqueous secondary battery including an electrode mixed material layer that can display excellent adhesiveness and flexibility.

Also, according to the present disclosure, it is possible to provide a non-aqueous secondary battery that includes this electrode for a non-aqueous secondary battery.

## Claims

1. A binder composition for a non-aqueous secondary battery electrode comprising a polymer X, wherein
the polymer X includes not less than 3 mass% and less than 10 mass% of an acidic group-containing monomer unit, not less than 55 mass% and not more than 90 mass% of a hydroxy group-containing acrylic acid ester monomer unit, and not less than 5 mass% and not more than 30 mass% of a hydroxy group-containing methacrylic acid ester monomer unit,
total proportional content of the hydroxy group-containing acrylic acid ester monomer unit and the hydroxy group-containing methacrylic acid ester monomer unit in the polymer X is not less than 60 mass% and not more than 97 mass%, and
the polymer X has a weight-average molecular weight of not less than 50,000 and less than 500,000.

2. The binder composition for a non-aqueous secondary battery electrode according to claim 1, wherein the hydroxy group-containing acrylic acid ester monomer unit includes an acrylic acid hydroxyalkyl ester monomer unit.

3. The binder composition for a non-aqueous secondary battery electrode according to claim 1, wherein the hydroxy group-containing methacrylic acid ester monomer unit includes a methacrylic acid hydroxyalkyl ester monomer unit.

4. The binder composition for a non-aqueous secondary battery electrode according to claim 1, wherein the acidic group-containing monomer unit includes either or both of a carboxy group-containing monomer unit and a sulfo group-containing monomer unit.

5. A slurry composition for a non-aqueous secondary battery electrode comprising: an electrode active material; and the binder composition for a non-aqueous secondary battery electrode according to claim 1.

6. The slurry composition for a non-aqueous secondary battery electrode according to claim 5, further comprising a particulate polymer Y that includes a hydrophilic group.

7. The slurry composition for a non-aqueous secondary battery electrode according to claim 5, wherein the electrode active material includes olivine-type lithium iron phosphate.

8. The slurry composition for a non-aqueous secondary battery electrode according to claim 5, further comprising a conductive material that includes one or more carbon nanotubes.

9. The slurry composition for a non-aqueous secondary battery electrode according to claim 8, wherein the conductive material further includes a particulate conductive material.

10. An electrode for a non-aqueous secondary battery comprising an electrode mixed material layer formed using the slurry composition for a non-aqueous secondary battery electrode according to any one of claims 5 to 9.

11. A non-aqueous secondary battery comprising the electrode for a non-aqueous secondary battery according to claim 10.
